# EUROPÄISCHE PATENTSCHRIFT

(11) **EP 0 769 627 B1**
(45) Veröffentlichungstag und Bekanntmachung des Hinweises auf die Patenterteilung: **02.08.2000**
(21) Anmeldenummer: 96115870.6
(22) Anmeldetag: 02.10.1996
(51) Int. Cl.: F16C 29/06

(54) **Linearführungseinrichtung**
Linear guiding device
Dispositif de guidage linéaire

(30) Priorität: 17.10.1995 DE 19538665; 31.07.1996 DE 29613277 U
(43) Veröffentlichungstag der Anmeldung: 23.04.1997
(73) Patentinhaber: Deutsche Star GmbH, 97424 Schweinfurt (DE)
(72) Erfinder: Faulhaber, Thomas, Dipl.-Ing., 97493 Bergrheinfeld (DE); Albert, Ernst, Dipl.-Ing., 97522 Sand am Main (DE); Pfeuffer, Viktor, Dipl.-Ing., 97493 Bergrheinfeld (DE)
(74) Vertreter: Weickmann, Heinrich, Dipl.-Ing.

(56) Entgegenhaltungen:
- EP-A- 0 318 980
- EP-A- 0 474 948
- EP-A- 0 494 682
- EP-A- 0 676 553
- US-A- 4 040 679
- US-A- 5 358 336
- US-A- 5 429 439
- US-A- 5 433 527
- PATENT ABSTRACTS OF JAPAN vol. 018, no. 469 (M-1666), 31 August 1994 & JP-A-06 147222 (KOYO SEIKO CO LTD), 27 May 1994
- PATENT ABSTRACTS OF JAPAN vol. 017, no. 584 (M-1501), 25 October 1993 & JP-A-05 172139 (TSUBAKIMOTO SEIKO:KK), 9 July 1993

## Beschreibung

Die Erfindung betrifft eine Linearführungseinrichtung nach dem Oberbegriff des Anspruchs 1.

Bei einer aus der EP-0 474 948 A1 bekannten Linearführungseinrichtung ist ein Wagenkörper von einem Führungswagengehäuse umschlossen. Das Führungswagengehäuse hat die Form eines Rechteckrahmens mit Seitenteilen, welche parallel zur Achse der Führungsschiene verlaufen und mit Endplatten, welche orthogonal zur Achse der Führungsschiene liegen. In den Seitenteilen sind radial äußere Bogenführungsflächen der Wälzkörperbogenführungen und an diese anschließend Wälzkörperführungsflächen der Wälzkörperrücklaufführungen ausgeformt. An dem Wagenkörper sind Führungsleisten angeformt, welche beim Einsetzen des Wagenkörpers in das Führungswagengehäuse in den Bereich der radial äußeren Bogenführungsflächen und der Rücklaufführungsflächen der Seitenteile gelangen und somit die Wälzkörperbogenführungen und die Wälzkörperrücklaufführungen ergänzen.

Die Führungsleisten des in der Regel aus Stahl hergestellten Wagenkörpers sind bei dieser Ausführungsform notwendigerweise in Richtung der Achse der Führungsschiene kürzer als der Abstand der an den Endplatten anliegenden Stirnflächen des Wagenkörpers. Dies bedeutet, daß eine aufwendige Bearbeitung des Wagenkörpers notwendig ist, um diesen an das Führungswagengehäuse so anzupassen, daß er in das Führungswagengehäuse positionsgerecht eingesetzt werden kann. Es ist also nicht ohne weiteres möglich, den Wagenkörper aus gezogenem Material einfach durch Ablängung eines Materialstrangs zu gewinnen; es genügt auch nicht, abgelängte Stücke des die Wagenkörper ergebenden Materialstrangs durch einfache Schleifvorgänge zum Zwecke der Genauigkeitserhöhung nachzuschleifen. Es sind vielmehr Fräsvorgänge notwendig, um aus einem abgelängten Stück eines Materialstrangs die Rippen herauszuarbeiten. Nach einer ersten Ausführungsform der EP-0 474 948 A1 (siehe dort Fig. 2) sind radial innere Führungsflächen der Wälzkörperbogenführungen an den Enden der Rippen angeformt. Dies bedeutet, daß eine besonders aufwendige Bearbeitung der Rippen notwendig ist, um an diesen die radial inneren Führungsflächen der Wälzkörperbogenführungen zu erhalten. Nach einer abgewandelten Ausführungsform (siehe Fig. 5 der EP-0 474 948 A1) sind die radial inneren Bogenführungsflächen der Wälzkörperbogenführungen an Umlenkstücken ausgebildet, welche ihrerseits einstückig an den Seitenteilen des Führungswagengehäuses angeformt sind. Dadurch wird zwar die Herstellung der radial inneren Bogenführungsflächen insofern erleichtert, als diese Bogenführungsflächen zu Teilen des Führungswagengehäuses werden, welches beispielsweise als Spritzteil oder als Gußteil aus Kunststoff oder Metall hergestellt werden kann. Das Problem der aufwendigen Herstellung des Wagenkörpers wird aber dadurch nicht gelöst, weil immer noch die Rippen kürzer sein müssen als die Längserstreckkung des Führungswagenkörpers in Richtung der Führungsschienenachse mit der Folge, daß jedenfalls eine querfräsende Bearbeitung des Führungswagenkörpers notwendig ist.

Aus der EP-A-0 494 682 ist eine Linearführungseinrichtung bekannt, bei welcher an einem auf seiner ganzen Länge profilkonstanten und deshalb relativ leicht herstellbaren Wagenkörper Umlenkplatten für radial äußere Bogenführungsflächen der Wälzkörperbogenführungen angebracht werden. Die beiden unter sich gleichen Umlenkplatten sind dabei mit jeweils einem Seitenteil einstückig verbunden. Jedes dieser Seitenteile ist an seinem von der zugehörigen Umlenkplatte fernen Ende mit einem Schnapphaken versehen, welcher beim Zusammenbau in eine Hakenaufnahme der jeweils anderen Umlenkplatte schnappend eingreift. Die Positionierung der Umlenkplatten an dem Wagenkörper in Querrichtung zur Führungsschienenachse erfolgt durch Positionierungszungen, welche in achsparallel verlaufende Positionierungsnuten an dem Wagenkörper eingreifen. Die Herstellung der Umlenkplatten mit dem jeweils angeformten Seitenteil und der jeweils angeformten Hakenaufnahme ist formgebungstechnisch sehr aufwendig, auch dann, wenn beabsichtigt sein sollte, diese Umlenkplatten gußtechnisch oder spritztechnisch herzustellen.

Zur Abdichtung des Wälzkörperumlaufs und des diesem zugeführten Schmiermittels ist ein Dichtungsrahmen vorgesehen, der Längsdichtungslippen in Parallelstellung zur Führungsschienenachse und Enddichtungsplatten zum dichtenden Eingriff mit dem Führungsschienenprofil aufweist. Dieser Dichtungsrahmen dient aber nicht dem Zusammenhalt der Umlenkplatten, sondern er wird - im Gegenteil - von den durch die Seitenteile zusammengehaltenen Umlenkplatten getragen.

Eine gattungsgemäße Linearführungseinrichtung ist ferner aus der JP-A-6-147222 bekannt. Bei dieser Linearführungseinrichtung sind radial innere und radial äußere Bogenführungsflächen der Wälzkörperbogenführungen vollständig an einem von den Endplatten und den Seitenteilen gebildeten einstückigen Rahmen angeformt. Die zwischen den Wagenkörper und die Endplatten einsetzbaren Bogenführungsbegrenzungskörper erfüllen lediglich eine Abdeckfunktion für die Wälzkörperbogenführungen. Eine exakte gegenseitige Positionierung ist deshalb im wesentlichen nur zwischen dem Rahmen und dem Wagenkörper erforderlich. Dementsprechend besteht bei der Montage des Führungswagens nur ein vergleichsweise geringer Justierbedarf, der gute Positionierungsgenauigkeiten ermöglicht. Allerdings ist die einstückige Herstellung des Rahmens mit den Bogenführungsflächen formgebungstechnisch sehr aufwendig. Dies gilt auch dann, wenn an Spritz- oder Spritzgußtechniken für den Rahmen gedacht wird. Auch können die Abrollverhältnisse der Wälzkörper ungünstig beeinflußt werden, wenn die Wälzkörper etwa durch Fliehkräfte in Kontakt mit den ohne Bogenführungsfunktion ausgestatteten Begrenzungskörpern gelangen und hierdurch unerwünschte Reibeffekte entstehen.

Eine weitere Linearführungseinrichtung ist aus der EP 0 318 980 A1 bekannt. Bei dieser bekannten Linearführungseinrichtung ist der Führungswagen von einem über seine axiale Länge profilkonstanten Wagenkörper, zwei an die axialen Stirnflächen des Wagenkörpers anzusetzenden Endblöcken und je zwei Seitenteilen in jedem Schenkelbereich des Führungswagens gebildet. An jeder dieser Komponenten sind Teile des Führungsflächensystems für die Wälzkörper von insgesamt vier Wälzkörperumläufen ausgebildet. Aufgrund der Vielzahl der Komponenten besteht ein hoher Justierbedarf. Zur Montage des Führungswagens werden die Komponenten miteinander und mit einem Dichtrahmen verschraubt. Die Verschraubung bringt insofern einen hohen Justieraufwand mit sich, als einerseits die Bohrungen in den einzelnen Komponenten sehr präzise hergestellt werden müssen und zum anderen die Schrauben nicht zu stark, aber auch nicht zu schwach angezogen werden dürfen, um Quetschverformungen zu vermeiden, aber auch um zu verhindern, daß sich die Schraubverbindungen nach einiger Zeit etwa durch betriebsbedingt auftretende Vibrationen wieder lösen.

Der Erfindung liegt die Aufgabe zugrunde, eine Linearführungseinrichtung der eingangs bezeichneten Art so auszugestalten, daß sie vereinfacht hergestellt werden kann.

Zur Lösung dieser Aufgabe ist nach einem ersten Aspekt der Erfindung eine Linearführungseinrichtung gemäß Anspruch 1 vorgesehen.

Da bei der erfindungsgemäßen Ausführungsform die äußeren Bogenführungsflächen der Wälzkörperbogenführungen an Umlenkkörpern, d.h. Umlenkplatten, ausgeführt sind, die nicht unmittelbar dem Zusammenhalt des Führungswagens dienen, gestaltet sich die Raumform der Umlenkplatten verhältnismäßig einfach. Außerdem ist eine Voraussetzung dafür geschaffen, auch den Wagenkörper verhältnismäßig einfach mit einem Mindestmaß an spanabhebenden Bearbeitungsvorgängen herzustellen. Auch das Führungswagengehäuse erhält eine relativ einfache Raumform.

Der Wagenkörper, an dem große Führungskräfte auftreten können, kann mit verhältnismäßig geringem Aufwand aus Stahl gefertigt werden, beispielsweise durch Ablängen von einem gezogenen Profilstrang, wobei vor oder nach dem Ablängen nur relativ geringfügige spanabhebende Nachbearbeitungsvorgänge notwendig sind. Die Umlenkplatten und das Führungswagengehäuse können aufgrund ihrer relativ einfachen Raumform mit relativ geringem Formenaufwand präzise hergestellt werden, beispielsweise gegossen oder gespritzt werden, und zwar aus Kunststoff oder aus einem der Gieß- oder Spritzgußverarbeitung zugänglichem Metall.

Der Zusammenbau der einzelnen Teile, d. h. des Führungswagengehäuses, des Wagenkörpers und der Umlenkplatten gestaltet sich trotz der vergrößerten Anzahl von Teilen verhältnismäßig einfach, und der fertige Wagen erfüllt nach Zusammenbau alle Anforderungen an die Führungsgenauigkeit, da diese im wesentlichen durch den Führungswagenkörper, die Wälzkörper und die Führungsschiene bestimmt ist. Da die für die Bogenführung der Wälzkörper und wenigstens z. T. auch für die Rücklaufführung der Wälzkörper verantwortlichen Teile, nämlich Führungswagengehäuse und Umlenkplatten, einfache Raumform besitzen, lassen sich diese leicht mit einer ausreichenden Präzision herstellen, um einen ruhigen stoßfreien Lauf der Wälzkörper über die jeweilige Umlaufstrecke zu erhalten.

Trotz der Zuordnung der Bogenführungsfunktion zu den Umlenkkörpern und der dadurch im Prinzip erschwerten gegenseitigen Justierung der Umlenkkörper, des Wagenkörpers und des Führungswagengehäuses (dies ist im Sinne eines ungestörten Wälzkörperumlaufs gemeint) werden durch den Positionierungsschacht alle Probleme der Justierung vermieden, wobei durch die Schnappverbindungsmittel überdies die Fixierung ausgesprochen einfach gestaltet wird, und zwar so, daß durch diese Fixierung keinerlei Positionierungsfehler herbeigeführt werden. Weiterhin werden durch die Ausstattung der Umlenkkörper mit Bogenführungsflächen gleichmäßige, reibungsarme Abrollverhältnisse in den Umlenkbereichen ermöglicht.

Als Wälzkörper kommen insbesondere Kugeln in Frage. Die erfindungsgemäße Bauweise der Linearführungseinrichtung ist grundsätzlich für alle Größen- und Leistungsanforderungen (Belastbarkeit!) anwendbar. Ein besonders interessantes Anwendungsgebiet für die erfindungsgemäße Bauweise ist die Herstellung sogenannter Miniaturschienenführungen, welche beispielsweise Führungsschienen mit einer Basisbreite (quer zur Führungsschienenachse gemessen) von 9 mm, einen Kugeldurchmesser von 1,7 - 2,5 mm, eine Gesamthöhe von ca. 10 mm, diese gemessen von der Basisfläche der Führungsschiene bis zur basisfernen Begrenzungsfläche des Führungswagens, und eine Wagenlänge in Richtung der Führungsschienenachse von ca. 30 mm haben. Solche Linearführungseinrichtungen werden in der Computer-Industrie, beispielsweise für Laufwerke, im Büromaschinenbau, im Meßinstrumentenbau, in der Halbleiterfertigung, in der Feinmechanik, in der Medizintechnik, im Roboterbau sowie in der Herstellung von Werkzeugeinstellgeräten verwendet. Grundsätzlich sind die erfindungsgemäßen Linearführungseinheiten für alle untergeordneten Führungen und an Handarbeitsplätzen geeignet, z. B. auch als Anschläge.

Zum Stand der Technik bezüglich Linearführungseinheiten wird ergänzend auf folgende Druckschriften verwiesen:
US-A-5,433,527
US-A-4,505,522
Prospekt THK Bearings der Firma THK Company Ltd. mit der Drucknummer SA 600 310
Prospekt THK LM System Linearführungen, Katalognummer 100-1 AG
Prospekt INA Miniaturkugelumlauf, Einheit KUME, Prospektnummer T 452 D - 03/92
DE 33 13 575 A1
DE 31 52 257 C2
EP-0 474 948 A1
EP 379 827 A1
DE 31 28 628 A1
US-A-4,637,739
DE 36 07 592 C2
EP-0 494 682 A2
EP-0 608 832 A2
DE 34 16 207 C2
Prospekt Franke & Heydrich KG, Franke-Linearführungen mit neuem Kugelumlaufelement KU
Prospekt Franke & Heydrich, Einfache und Doppelkugelführungen
DE-A-2 027 338

Wenn entsprechend einer verbreiteten Übung zur Linearführung an zwei voneinander beabstandeten Seitenflächen einer Führungsschiene je mindestens ein Wälzkörperumlauf vorgesehen ist, so kann das Führungswagengehäuse beidseits der Führungsschiene je ein Seitenteil aufweisen, wobei dann an jedem dieser Seitenteile mindestens ein Wälzkörperumlauf vorgesehen ist.

Für eine einfache Montage des erfindungsgemäßen Führungswagens ist es von Vorteil, wenn der Wagenkörper und die Umlenkkörper in zur Achsrichtung der Schiene orthogonaler Richtung in das Führungswagengehäuse eingeschoben und dort befestigt sind.

Bei der erfindungsgemäßen Linearführungseinheit ist es möglich, daß eine radial innere Führungsfläche der Wälzkörperbogenführung an dem Führungswagengehäuse angebracht ist und weitere, vorzugsweise alle weiteren, Führungsflächen der Wälzkörperbogenführung an dem zugehörigen Umlenkkörper angebracht sind. Auf diese Weise wird die Zahl der den Führungswagen insgesamt bildenden Teile reduziert und damit der Zusammenbau des Führungswagens vereinfacht, ohne daß der Aufwand für die präzise Herstellung wesentlich vergrößert wird.

Die Herstellung des Führungswagengehäuses läßt sich für die Serienfertigung dadurch vereinfachen, daß die Seitenteile mit den Endplatten einstückig hergestellt sind.

Eine weitere Vereinfachung ist dadurch möglich, daß die Seitenteile zusammen mit den Endplatten aus gieß- oder spritzbarem Material, insbesondere Kunststoff, einstückig hergestellt sind. Im Regelfall wird das Führungswagengehäuse nach Art eines Rechteckrahmens ausgebildet sein, wobei dieser Rechteckrahmen bevorzugt sowohl eine Symmetrie in bezug auf eine zur Schienenachse orthogonale, durch die Längsmitte des Führungswagens verlaufende Symmetrieebene als auch eine Symmetrie in bezug auf eine die Achse der Führungsschiene enthaltende Längssymmetrieebene besitzt.

Auch die Umlenkkörper können aus gieß- oder spritzbarem Material vorzugsweise einstückig hergestellt sein, insbesondere aus Kunststoff.

Ein besonderer Vorteil der erfindungsgemäßen Gestaltung ist es, daß der Wagenkörper als ein Profilkörper ausgeführt werden kann, welcher - in Schnittebenen orthogonal zur Achsrichtung der Führungsebene betrachtet - im wesentlichen über seine gesamte zur Achsrichtung parallele Längserstreckung konstantes Profil besitzt. Auf diese Weise wird die Herstellung des Wagenkörpers äußerst einfach, und die Zahl der spanabhebenden Bearbeitungsvorgänge, die nach einem Ablängen von einem gezogenen Profilstrang noch notwendig sind, auf ein Minimum reduziert; möglicherweise werden solche Bearbeitungsvorgänge überhaupt überflüssig. Die Wälzkörperrücklaufführung kann durch zusammenwirkende Rücklaufführungsflächen des Wagenkörpers und des Gehäuses gebildet sein. Hierdurch wird die Zahl der Bearbeitungsvorgänge weiter verringert, weil Bohrvorgänge zur Bereitstellung von Rücklaufführungen sich erübrigen.

Der Zusammenbau des Führungswagens kann dadurch vereinfacht werden, daß an dem Führungswagengehäuse, an dem Wagenkörper oder/und an mindestens einem der Umlenkkörper Positionierungsflächen angeformt sind, welche bei Einbau des Wagenkörpers bzw. der Umlenkkörper in das Führungswagengehäuse für eine funktionsgerechte Positionierung dieser Teile relativ zueinander sorgen. Es brauchen bei dieser Bauweise keine besonderen Justiermaßnahmen mehr ergriffen zu werden, um die wesentlichen Teile des Führungswagens in die richtige gegenseitige Position zu bringen.

Eine für viele Anwendungszwecke geeignete Ausführungsform siehL zu beiden Seiten einer Führungsschiene mindestens einen Wälzkörperumlauf, insgesamt also mindestens zwei Wälzkörperumläufe vor; dann kann das Führungswagengehäuse in Form eines Rechteckrahmens mit zwei Seitenteilen und zwei Endplatten ausgeführt werden, die durch die Seitenteile miteinander verbunden sind. Die beiden Seitenteile und die beiden Endplatten bilden dann den Positionierungsschacht, welcher die Einführung des Wagenkörpers oder/und der Umlenkkörper in einer Einführungsrichtung gestattet. Diese Einführungsrichtung kann dann annähernd orthogonal zur Schienenachse und zu einer Schleifenebene der Wälzkörperumläufe sein.

Der Positionierungsschacht kann ausgeführt sein mit der Einführung des Wagenkörpers und der Umlenkkörper dienenden Einführungsflächen, welche die Einführung im Sinne einer Annäherung des jeweiligen Teils an die Führungsschienenachse gestatten. Außerdem kann der Positionierungsschacht eine die Einführung begrenzende Bodenfläche besitzen, so daß durch den Positionierungsschacht die Position des Wagenkörpers bzw. der Umlenkkörper eindeutig festgelegt ist. An der Bodenfläche kann dabei mindestens ein Umlenkstück einer Wälzkörperbogenführung angebracht sein, und zwar vorzugsweise einstückig mit der Bodenfläche. Dieses Umlenkstück ist dann mit einer zur Schleifenebene eines zugehörigen Wälzkörperumlaufs im wesentlichen orthogonalen, radial inneren Bogenführungsfläche für diesen Wälzkörperumlauf ausgebildet.

Zur Bereitstellung weiterer Bogenführungsflächen kann man in einer dem Wagenkörper zugekehrten Anlagefläche mindestens eines Umlenkkörpers eine teilbogenförmige Führungsrinne für die Wälzkörper der jeweiligen Bogenwälzkörperreihe versenkt anordnen, und zwar im wesentlichen konzentrisch zu der radial inneren Bogenführungsfläche.

Der stoßfreie Übergang aus einer Wälzkörperbogenführung in eine lasttragende Wälzkörperreihe kann dadurch sichergestellt werden, daß an mindestens einem der Umlenkkörper als Teil der Wälzkörperbogenführung eine Umlenkzunge angeformt ist, welche im wesentlichen tangential auf eine zugehörige tragende Wälzkörperlaufbahn der Führungsschiene zuläuft.

Für die universelle Verwendbarkeit einer Linearführungseinheit ist es von Bedeutung, daß die Wälzkörper der tragenden Wälzkörperreihe an dem Führungswagen auch dann gegen Verlust gesichert sind, wenn der Führungswagen von der Führungsschiene abgezogen ist. Die Füllung des Führungswagens mit Wälzkörpern, insbesondere Kugeln, erfolgt in der Regel beim Hersteller des Wagens, und der Verwender des Wagens kann diesen unschwer zu einem späteren Zeitpunkt auf eine Führungsschiene aufschieben. Zur Sicherung der Wälzkörper der tragenden Wälzkörperreihe in dem Führungswagen kann mindestens ein Sicherungssteg vorgesehen sein, der sich im wesentlichen parallel zur Achse der Führungsschiene erstreckt. Im Hinblick auf das Ziel einfachster Herstellung und Montage ist es dabei vorteilhaft, daß der Sicherungssteg gesondert von den Umlenkkörpern und dem Führungswagengehäuse hergestellt ist. Grundsätzlich ist es allerdings auch denkbar, den Führungswagen auf eine Hilfsschiene z. B. aus Kunststoff aufzuschieben, nachdem die Kugeln eingefüllt worden sind. In diesem Falle ist der Sicherungssteg möglicherweise vermeidbar.

Die Anbringung des Sicherungsstegs an dem Führungswagen kann dabei darauf beruhen, daß der Sicherungssteg an mindestens einem seiner Enden mit einem zur Achse im wesentlichen orthogonalen Befestigungsschenkel versehen ist, welcher an einem zur Achse im wesentlichen orthogonalen Teil des Führungswagens sicherbar ist, vorzugsweise einer Endplatte. Bei Führungswagen, die in bezug auf ihre zur Führungsschienenachse orthogonale Mittelebene symmetrisch ausgebildet sind, kann man einen Sicherungssteg anwenden, der mit zwei Befestigungsschenkeln im wesentlichen U-förmig gestaltet ist.

Zur einfachen Montage des Führungswagens gehört auch eine einfache Methode des Einfüllens der Wälzkörper und insbesondere der Kugeln. Es wird deshalb weiter vorgeschlagen, daß der Sicherungssteg zwischen einer Sicherungsstellung und einer Kugeleinfüllstellung, vorzugsweise im wesentlichen orthogonal zur Achse, verstellbar ist. Voraussetzung hierfür ist natürlich, daß das Einfüllen der Kugeln erfolgt, solange der Führungswagen von der Führungsschiene abgezogen ist. Dabei kann der Sicherungssteg, wie schon weiter oben angedeutet, U-förmig sein; er kann weiter durch Verrastungsmittel in der jeweiligen Position festgelegt werden, und es können Maßnahmen getroffen sein, um einerseits unbeabsichtigtes Verschieben des Sicherungsstegs zu verhindern, andererseits aber dennoch dessen Überführung von der Wälzkörperfüllstellung in die Sicherungsstellung leicht möglich zu machen.

Die Handhabung beim Einfüllen der Wälzkörper läßt sich dadurch besonders einfach gestalten, daß für den Befestigungsschenkel an der Endplatte neben einer der Sicherungsstellung des Sicherungsstegs entsprechenden ersten Rastposition eine der Kugeleinfüllstellung des Sicherungsstegs entsprechende zweite Rastposition vorgesehen ist. Dann gelingt es, daß der Befestigungsschenkel von der zweiten Rastposition in die erste Rastposition durch Druckeinwirkung überführbar ist und in der ersten Rastposition selbsttätig und positionsgenau verrastet.

Um eine gegenseitige Störung von Sicherungssteg und Wälzkörpern zu vermeiden, besteht die Möglichkeit, daß die tragende Wälzkörperlaufbahn der Führungsschiene von zwei Teillaufbahnen gebildet ist, welche durch eine Aufnahmenut für den Sicherungssteg voneinander getrennt sind. Diese Möglichkeit ist aus dem Stand der Technik bekannt. Hierzu wird beispielsweise auf die DE 33 13 575 A1 oder die DE-A-2 027 338 verwiesen.

Für den stoßfreien Übergang der Wälzkörper aus der Wälzkörperbogenführung in die lasttragende Wälzkörperreihe ist es von Vorteil, wenn der Sicherungssteg im Übergangsbereich von der tragenden Wälzkörperreihe zu einer Bogenwälzkörperreihe über eine Außenfläche einer Umlenkzunge für die Wälzkörper verläuft, welche Außenfläche einer Umlenkfläche der Umlenkzunge abgekehrt ist.

Es ist auch möglich, zur Sicherung der Wälzkörper zwei Sicherungsstege an der lasttragenden Wälzkörperreihe beidseits ihrer Berührungslinie mit der lasttragenden Wälzkörperlaufbahn der Führungsschiene anliegen zu lassen, wobei der gegenseitige Abstand dieser beiden Sicherungsstege dann kleiner sein muß als der Durchmesser der Wälzkörper, wenn diese beispielsweise als Kugeln ausgebildet sind.

Bei der erfindungsgemäßen Linearführungseinheit stellt sich natürlich auch das Problem der Schmierung. Dieses Problem kann durch eine laufende oder periodische Zuführung von Schmiermittel von außen gelöst werden oder auch durch eine Lebensdauerfüllung. Je nach Viskosität des Schmiermittels stellt sich dann auch das Problem der Abdichtung des Schmiermittels. Zur Lösung dieses Problems kann man einerseits an einem Seitenteil des Führungswagengehäuses eine Längsdichtung in dichtender Position gegenüber der Führungsschiene anbringen; andererseits kan man an einer von dem Wagenkörper abgewandten Seite mindestens einer Endplatte mindestens eine Dichtungsanordnung in Dichtungsposition gegenüber einem Profil der Führungsschiene anbringen. Durch die Anbringung dieser Dichtungsmittel wird nicht nur der Verlust von Schmiermittel und damit die Notwendigkeit häufiger Nachschmierung vermieden, sondern überdies sichergestellt, daß an der Führungsschiene kein oder allenfalls ein vernachlässigbarer Schmierfilm außerhalb des jeweiligen Positionsbereichs des Führungswagens zurückbleibt.

Die Dichtungsanordnung, die mit dem Profil der Führungsschiene zusammenwirken soll, ist vorzugsweise als eine Dichtplatte mit einer an dem Profil der Führungsschiene anliegenden Dichtlippe ausgebildet.

Eine bevorzugte Bauweise zeichnet sich dadurch aus, daß mindestens einer der Umlenkkörper unmittelbar an seiner zugehörigen Endplatte durch Schnappverbindungsmittel gesichert ist und seinerseits die Sicherung des Wagenkörpers innerhalb des Führungswagengehäuses durch den Wagenkörper übergreifende Vorsprünge übernimmt.

Auch eine Dichtungsanordnung kann an dem Führungswagengehäuse durch Schnappverbindungsmittel gesichert werden, insbesondere an den von dem Wagenkörper abgelegenen Endflächen der Endplatten.

Häufig wird der Wagenkörper zur Führung eines Werkstücks oder eines Werkzeugs oder einer Meßvorrichtung an einer Führungsschiene bestimmt sein. Im Hinblick darauf kann vorgesehen sein, daß der Wagenkörper zur Anbringung einer durch ihn längs der Führungsschiene geführten Baueinheit ausgebildet ist, etwa in der Weise, daß an dem Wagenkörper mindestens eine über das Führungswagengehäuse vorspringende Anlagefläche für die Baueinheit ausgebildet ist.

Der Führungswagen kann mit mindestens einer von außen zugänglichen Schmiermittelzuführbohrung versehen sein. Diese ermöglicht eine problemlose, einmalige, laufende oder periodische Zuführung von Schmiermittel zu dem Wälzkörperumlauf.

Um einen Ausfluß des Schmiermittels zu verhindern, kann die bzw. mindestens eine der Schmiermittelzuführbohrungen mit Rückschlagventilen versehen sein.

Beispielsweise kann die Schmiermittelzuführbohrung an dem Führungswagen im Bereich mindestens einer Endplatte angeordnet sein. In diesem Fall kann die Verbindung der Schmiermittelzuführbohrung mit dem Wälzkörperumlauf derart sein, daß die Schmiermittelzuführbohrung über mindestens einen sich in Achsrichtung über eine Endplatte und einen Umlenkkörper hinweg erstreckenden Schmiermittel-Durchgangskanal mit dem Wälzkörperumlauf verbunden ist und der Schmiermittel-Durchgangskanal im Bereich einer Wälzkörperbogenreihe in den Wälzkörperumlauf einmündet. Dabei besteht die Möglichkeit, daß der Schmiermittel-Durchgangskanal die Endplatte durchsetzt. Ferner kann der Schmiermitteldurchgangskanal den Umlenkkörper durchsetzen. Alternativ ist es jedoch auch denkbar, daß der Schmiermittel-Durchgangskanal im Überbrückungsbereich des Umlenkkörpers von einer offenen Schmiermittelnut in einer zur Achse parallelen Endfläche des Umlenkkörpers gebildet ist, wobei diese Nut durch das anliegende Seitenteil des Führungswagengehäuses abgedeckt ist. Der Schmiermittel-Durchgangskanal kann einen der Einmündung in den jeweiligen Wälzkörperumlauf nahen Endabschnitt aufweisen, welcher durch eine zum Wagenkörper hin offenliegende Rinne der Endplatte gebildet ist, wobei diese offenliegende Rinne durch die Anlage an einer zugehörigen achsnormalen Endfläche des Wagenkörpers abgedeckt ist. Das Schmiermittel gelangt so nach dem Austritt aus dem Schmiermittel-Durchgangskanal direkt in den Wälzkörperumlauf.

Der Schmiermittel-Durchgangskanal kann an dem Führungswagengehäuse derart ausgebildet sein, daß er einen der Schmiermittelzuführbohrung nahen Endabschnitt aufweist, welcher eine an einer Endplatte anliegende Dichtplatte durchsetzt.

Es ist aber auch möglich, daß die Schmiermittelzuführbohrung an einem von der Dichtplatte nicht überdeckten Bereich der Endplatte vorgesehen ist. Bei dieser Ausführungsform muß lediglich darauf geachtet werden, daß sich der Schmiermittel-Durchgangskanal im Übergangsbereich Endplatte/Umlenkkörper fortsetzt; diese Ausführungsform eignet sich bei komplizierteren Anschlußkonstruktionen, die sich an den regelmäßig aus härterem Werkstoff bestehenden Endplatten leichter anbringen oder ausformen lassen. Endplatte und Dichtplatte können dabei so ausgeführt sein, daß die Dichtplatte eine Aussparung aufweist und daß an der Endplatte ein in Achsrichtung vom Wagenkörper weg vorstehender Vorsprung angeordnet ist, dessen vom Wagenkörper abgelegene Endfläche die Schmiermittelzuführbohrung aufweist, und daß der Vorsprung wenigstens teilweise von einer Randaussparung der Dichtplatte aufgenommen ist. Bevorzugt ist dabei der Vorsprung zur Randaussparung der Dichtplatte im wesentlichen komplementär, so daß sich insgesamt eine glatte formschöne Außenansicht ergibt.

Ergänzend oder alternativ zu der Möglichkeit der Schmiermittelzuführung in einem Endbereich des Führungswagens kann mindestens eine Schmiermittelzuführbohrung im Bereich eines Seitenteils und/oder einer parallel zu dem Seitenteil laufenden Seitenfläche des Führungswagens angeordnet sein. Auf diese Weise kann die Schmiermittelzuführung je nach Raumangebot und Einbauverhältnissen über ein Seitenteil bzw. eine Seitenfläche oder/und über den Endabschnitt des Führungswagens erfolgen. Die Anordnung der Schmiermittelzuführbohrung kann im Stoßbereich zwischen einem Rand des Seitenteils und einem anschließenden Bereich des Wagenkörpers angeordnet sein. Um das Schmiermittel auf dem direkten und kürzesten Weg zu dem Wälzkörperumlauf zu führen, kann die Schmiermittelzuführbohrung in einer zur Achse im wesentlichen orthogonalen Ebene - vorzugsweise geradlinig - zu der rücklaufenden Wälzkörperreihe führen.

Nach einer weiteren Ausbildungsmöglichkeit ist der Sicherungssteg am Ende seiner orthogonalen Befestigungsschenkel mit Sicherungsschenkeln ausgeführt, welche im wesentlichen parallel zur Achse sind und in Sicherungsschenkel-Aufnahmeausnehmungen der Endplatten und gewünschtenfalls auch der Umlenkkörper sichernd eintauchen. Dies gewährleistet einen besonders festen Sitz des Sicherungsstegs. Zur Kugelfüllung kann der Sicherungssteg in seinem mittleren Bereich ausgelenkt werden. Man kann aber auch bei dieser Ausführungsform durch zusätzliche Aufnahmeaussparungen eine Füllposition des Sicherungsstegs ermöglichen. Im zusammengebauten Zustand des Führungswagens kann der Befestigungsschenkel in einem reliefartigen Aufnahmeschlitz einer Endplatte und/oder einer anliegenden Dichtplatte aufgenommen sein.

Die beiliegenden Figuren erläutern die Erfindung anhand von Ausführungsbeispielen. Es stellen dar:
- Fig. 1: eine perspektivische Ansicht der Linearführungseinheit;
- Fig. 2: eine perspektivische Untersicht in Pfeilrichtung II der Fig. 1 des Führungswagens;
- Fig. 3: eine Explosionsdarstellung des Führungswagens;
- Fig. 4: einen Schnitt nach Linie IV-IV der Fig. 1;
- Fig. 5: einen Schnitt nach Linie V-V der Fig. 4;
- Fig. 6: eine perspektivische Untersicht wiederum in Pfeilrichtung II der Fig. 1 des Führungswagens, wobei Sicherungsstege für die Kugeln eine Füllstellung einnehmen;
- Fig. 7: eine perspektivische Untersicht wiederum in Pfeilrichtung II der Fig. 1 auf eine hinsichtlich der Kugelsicherung abgewandelte Ausführungsform;
- Fig. 8: eine Explosionsdarstellung einer weiteren hinsichtlich der Kugelsicherung abgewandelten Ausführungsform;
- Fig. 9: einen Schnitt entsprechend dem der Fig. 4 der Ausführungsform der Fig. 8;
- Fig. 10: eine perspektivische Ansicht der Linearführungseinrichtung der Fig. 1 mit einer hinsichtlich der Dichtplatte abgeänderten Ausführungsform;
- Fig. 11: eine Explosionsdarstellung der in Fig. 10 dargestellten Linearführungseinrichtung;
- Fig. 12: eine Draufsicht auf das Führungswagengehäuse der Ausführungsform nach Fig. 11 mit eingesetztem Sicherungssteg;
- Fig. 13: eine Endansicht des Führungswagengehäuses in Richtung des Pfeils XIII der Fig. 12.

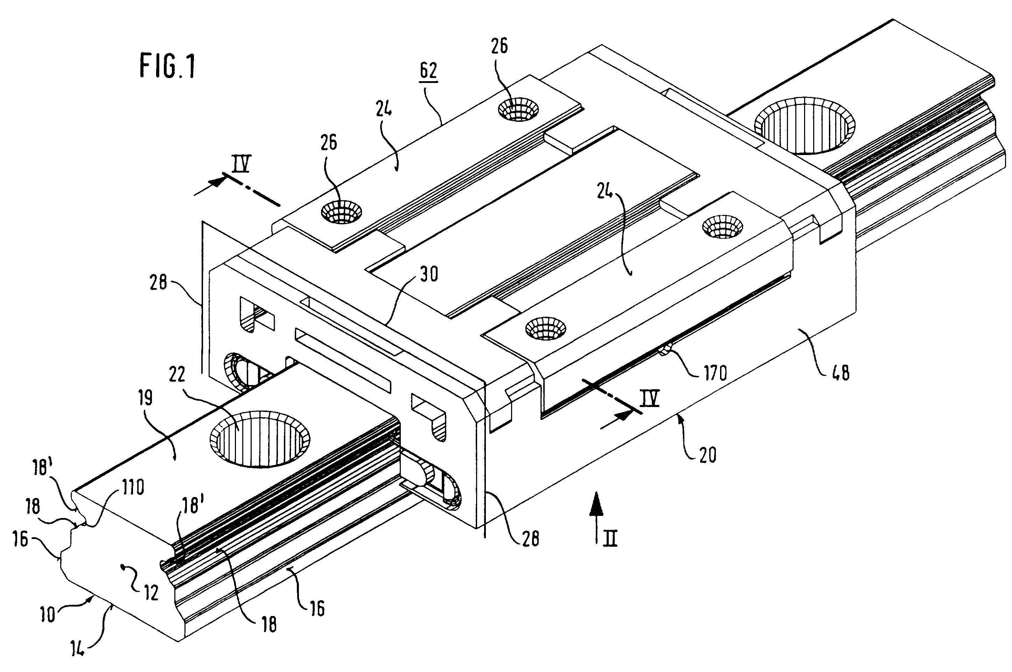

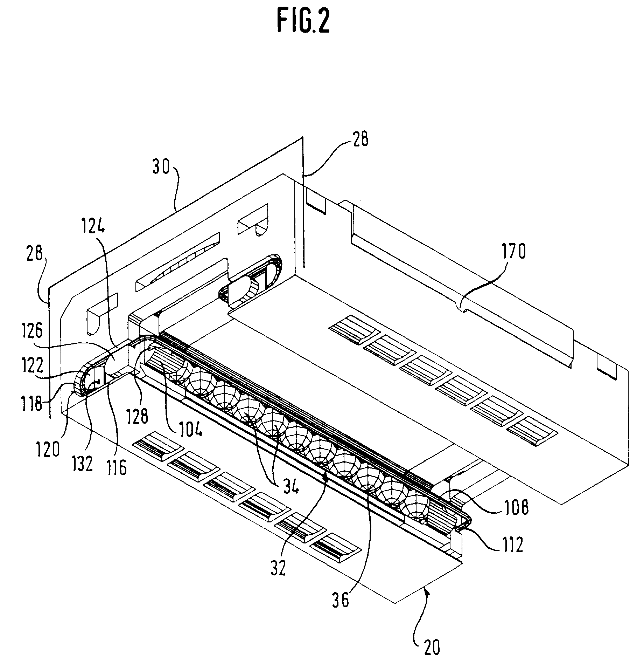

In der Fig. 1 ist eine Führungsschiene mit 10 bezeichnet. Diese Führungsschiene 10 weist eine Achse 12, eine Basisfläche 14, Seitenflächen 16 sowie lasttragende Wälzkörperlaufbahn-Zonen 18 und 18' auf, die zusammen jeweils eine lasttragende Wälzkörperlaufbahn 18-18' der Führungsschiene 10 bilden, nämlich eine lasttragende Kugellaufbahn 18-18'. Auf der Führungsschiene 10 ist ein Führungswagen 20 geführt. Die Führungsschiene 10 kann mit ihrer Basisfläche 14 auf einer Tragkonstruktion, beispielsweise dem Bett einer Werkzeugmaschine oder dem Gestell einer Meßeinrichtung, gelagert und dort mittels Befestigungsbolzen befestigt sein, welche die Führungsschiene 10 in Befestigungsbohrungen 22 durchsetzen. Der Führungswagen 20 dient zur Führung eines Werkstücks oder eines Werkzeugs längs der Führungsschiene 10 und ist zu diesem Zweck mit Auflageflächen 24 für das Werkzeug oder Werkstück und mit Befestigungsbohrungen 26 ausgeführt. Der Aufbau des Führungswagens ergibt sich für die erste Ausführungsform aus den Fig. 2 - 6.

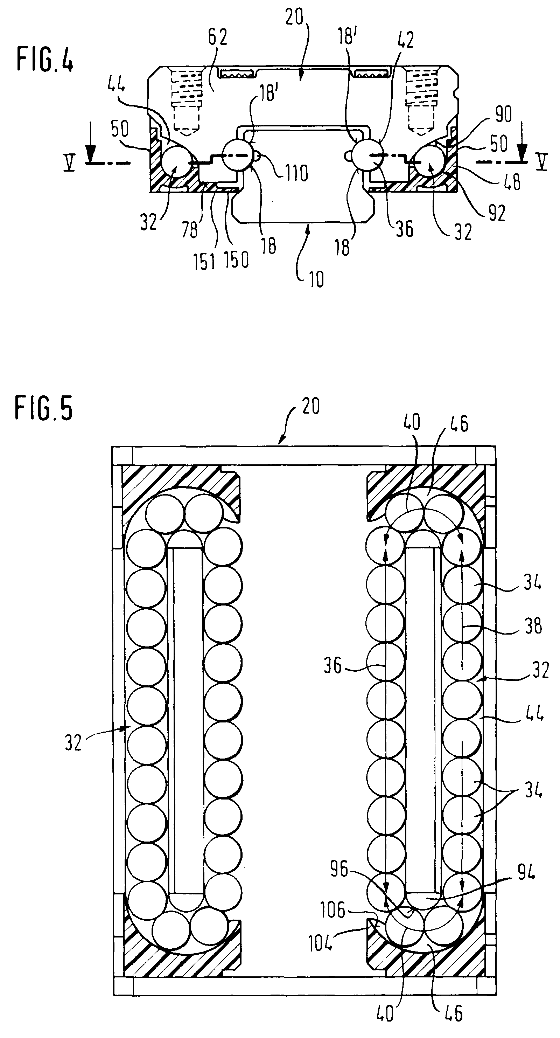

Aus Fig. 2 erkennt man zunächst, daß der Führungswagen 20 im wesentlichen U-förmig ist mit zwei Schenkelbereichen 28 und einem Stegbereich 30, welche schematisch in Strichmanier angedeutet sind. Die Schenkelbereiche 28 liegen den Seitenflächen 16 der Führungsschiene gemäß Fig. 1 benachbart, während der Stegbereich 30 der Deckfläche 19 der Führungsschiene 10 gemäß Fig. 1 benachbart liegt. Der Führungswagen 20 ist auf den lasttragenden Wälzkörperlaufbahnen 18-18' durch Wälzkörperumläufe 32 geführt, welche in Fig. 4 und 5 am besten zu erkennen sind. Die Wälzkörperumläufe 32 sind von Kugeln 34 in endloser Schleifenanordnung gebildet. Jeder Kugelumlauf 32 weist eine lasttragende Kugelreihe 36, eine rücklaufende Kugelreihe 38 und zwei Bogenkugelreihen 40 auf. Die lasttragende Kugelreihe 36 ist gemäß Fig. 4 an der lasttragenden Kugellaufbahn 18-18' der Führungsschiene 10 geführt. Andererseits sind die lasttragenden Kugelreihen 36, wie aus Fig. 4 ersichtlich, an lasttragenden Kugellaufbahnen 42 des Führungswagens 20 geführt. Die rücklaufenden Kugelreihen 38 sind in einer Kugelrücklaufführung 44 des Führungswagens 20 geführt, und die Bogenkugelreihen 40 sind in Kugelbogenführungen 46 des Führungswagens 20 geführt.

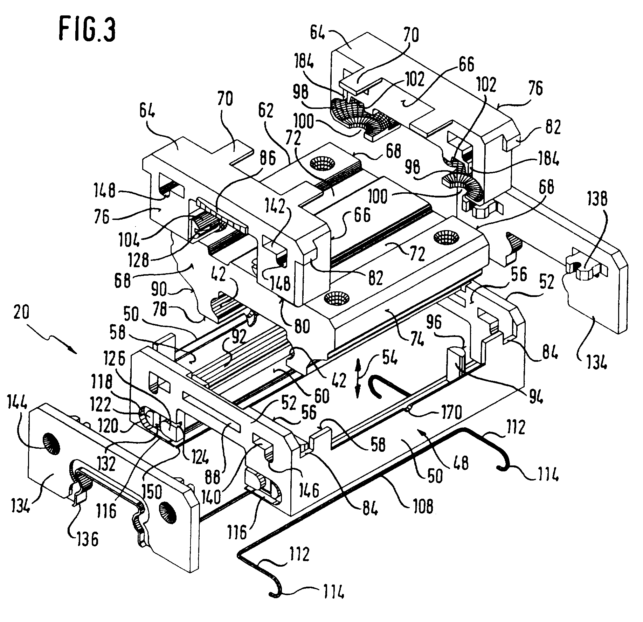

Aus Fig. 3 erkennt man den strukturellen Aufbau des Führungswagens 20. Der Führungswagen 20 umfaßt ein Führungswagengehäuse 48 mit zwei Seitenteilen 50 und zwei Endplatten 52. Die Seitenteile 50 und die Endplatten 52 bilden einen Positionierungsschacht 54, welcher durch den Doppelpfeil 54 angedeutet ist. Dieser Positionierungsschacht 54 ist durch Einführungsflächen 56,58 und durch eine Bodenfläche 60 begrenzt.

Weiter umfaßt der Führungswagen 20 einen Wagenkörper 62 und zwei Umlenkplatten 64. Die Umlenkplatten 64 weisen Anlageflächen 66 auf, die zur Anlage an achsnormalen Endflächen 68 des Wagenkörpers 62 bestimmt sind. Weiter weisen die Umlenkplatten 64 aufeinanderzu gerichtete Vorsprünge 70 auf, welche die relative Positionierung der Umlenkplatten 64 und des Wagenkörpers 62 übernehmen, indem sie in Längsnuten 72 an der Oberseite des Wagenkörpers 62 eingreifen. Den Einbau des Wagenkörpers 62 und der Umlenkplatten 64 in den Posiotionierungssschacht 54 kann man sich so vorstellen, daß die Umlenkplatten 64 an den Endflächen 68 des Wagenkörpers 62 zur Anlage und die Vorsprünge 70 zum Eingriff in die Längsnuten 72 gebracht werden und daß das so gebildete, von Hand oder durch Montage-Hilfsmittel zusammengehaltene Paket sodann in den Potionierungsschacht 54 eingesenkt wird, wobei Gegenführungsflächen 74 des Wagenkörpers 62 an den Einführungsflächen 58 geführt werden und die vom Wagenkörper 62 abgelegenen Endflächen 76 der Umlenkplatten 64 an den Einführungsflächen 56 des Positionierungsschachts 54 geführt werden, solange, bis die Unterflächen 78 des Wagenkörpers 62 und die Unterflächen 80 der Umlenkplatten 64 auf der Bodenfläche 60 zur Auflage kommen. Dann sind die wesentlichen Bestandteile des Führungswagens 20, nämlich das Führungswagengehäuse 48, der Wagenkörper 62 und die Umlenkplatten 64, richtig zueinander positioniert. Zusätzlich sind zur Positionierung die Vorsprünge 82 an den Umlenkplatten 64 vorgesehen, die im zusammengebauten Zustand in Kerben 84 der Seitenteile 50 des Führungswagengehäuses 48 eingreifen. Die Sicherung der Umlenkplatten 64 gegen Ausheben aus dem Positionierungsschacht 54 erfolgt durch Leisten 86, die im Zuge der Einführungsbewegung in den Positionierungsschacht 54 in Schlitze 88 einschnappen. Hierzu können die Leisten 86 keilförmig abgeschrägt sein, so daß sie bei der Einführungsbewegung in den Positionierungssschacht 54 die Endplatten 52 voneinander drücken, solange, bis die Leisten 86 dann in den jeweiligen Schlitz 88 einfallen. Der Halt des Wagenkörpers 62 gegen Ausheben aus dem Positionierungsschacht 54 ist dann durch die Vorsprünge 70 der Umlenkplatten 64 gewährleistet.

Soweit die mechanische Struktur des Führungswagens.

Zur Erläuterung eines Wälzkörperumlaufs 32 wird nun gleichzeitig auf die Fig. 3, 4 und 5 hingewiesen. Die lasttragende Kugelreihe 36 wird an dem Führungswagen 20 gemäß Fig. 3 an der lasttragenden Kugellaufbahn 42 geführt, die Bestandteil des Wagenkörpers 62 ist, wie sich aus Fig. 3 ergibt. Auf die Sicherung der Kugeln der lasttragenden Kugelreihe 36 in Eingriff mit der lasttragenden Kugellaufbahn 42 des Wagenkörpers 62 wird später noch eingegangen werden.

Die Kugelrücklaufführung 44 gemäß Fig. 4 und 5 ist einerseits von einer Rücklaufführungsbahn 90 des Wagenkörpers 62 und andererseits von einer Rücklaufführungsbahn 92 des Führungswagengehäuses 48 gebildet.

Die in Fig. 5 allgemein mit 46 bezeichnete Kugelbogenführung umfaßt jeweils ein Umlenkstück 94, welches einstückig an der Bodenfläche 60 des Führungswagengehäuses 48 angeformt ist und eine radial innere Bogenführungsfläche 96 darbietet. Ferner umfaßt die Kugelbogenführung 46 eine Rinne 98, welche in die Anlagefläche 66 der Umlenkplatte 64 eingesenkt ist. An der Umlenkplatte 64 sind dabei im Bereich der Rinne 98 kreisförmige Ausnehmungen 100 und 102 ausgeformt, welche das Umlenkstück 94 aufnehmen, so daß dessen radial innere Bogenführungsfläche 96 zusammen mit der Rinne 98 die halbtorische Kugelbogenführung 46 ergibt. Zur störungsfreien Überführung der umlaufenden Kugeln 34 aus der Geradführungsstrecke der lasttragenden Kugelreihe 36 in die Kugelbogenführung 46 und umgekehrt sind an den Umlenkplatten 64 Umlenkzungen 104 (Fig. 3 und 5) angeformt, welche ein der jeweils zugehörigen lasttragenden Kugellaufbahn 18-18' der Führungsschiene 10 angepaßtes Halbkreisprofil besitzen und, wie aus Fig. 5 ersichtlich, zu ihren Zungenspitzen hin an Wandstärke abnehmen, so daß sie eine im wesentlichen tangential in die jeweilige lasttragende Kugellaufbahn 18-18' der Führungsschiene 10 einlaufende Einleitungfläche 106 bilden.

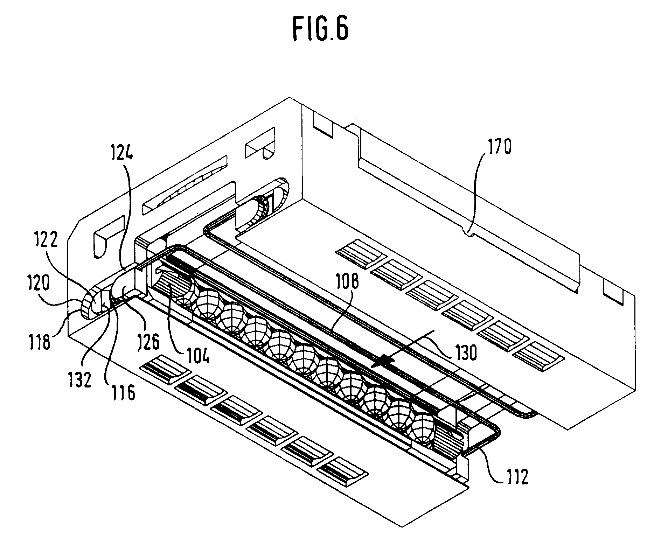

Unter Hinweis auf die Fig. 2 und 3 wird nun ausgeführt, wie die Kugeln 34, welche jeweils die lasttragende Kugelreihe 36 bilden, am Führungswagen 20 festgehalten werden, so daß auch bei Trennung des Führungswagens 20 von der Führungsschiene 10 diese Kugeln 34 sich von dem Führungswagen 20 nicht lösen können. Hierzu ist ein Sicherungssteg 108 vorgesehen, der aus einem Drahtstück gebildet ist. Dieser Sicherungssteg 108 liegt im zusammengebauten Zustand von Führungsschiene 10 und Führungswagen 20 in einer Längsrinne 110, welche, wie in Fig. 1 und 4 deutlich zu erkennen, die beiden Laufbahnzonen 18,18' der lasttragenden Kugellaufbahn 18-18' der Führungsschiene 10 voneinander trennt. Dieser Sicherungssteg 108 wird am Führungswagengehäuse 48 befestigt, wie es sich am besten aus Fig. 3 erkennen läßt. An dem Sicherungssteg 108 sind Befestigungsschenkel 112 angeformt, welche an ihren Enden halbbogenförmige Krümmungen 114 aufweisen. Die Befestigungsschenkel 112 werden in Ausnehmungen 116 an den vom Wagenkörper abgelegenen Seitenflächen der Endplatten 52 eingelegt. Innerhalb dieser Ausnehmungen 116 sind dabei zwei Positionen für die Befestigungsschenkel 112 und damit für den jeweiligen Sicherungssteg 108 möglich. In einer ersten Position, der Sicherungsposition, welche in Fig. 2 dargestellt ist, greift die halbbogenförmige Krümmung 114 in eine schienenferne Rinne 118 der Ausnehmung 116 ein, welche durch die Umfangsbegrenzung 120 der Ausnehmung 116 und durch einen Nocken 122 definiert ist. In einer zweiten Position, der Kugeleinfüllposition, welche in Fig. 6 dargestellt ist, greift die halbbogenförmige Krümmung 114 in eine Rinne 124 ein, welche innerhalb der Ausnehmung 116 zwischen dem Nocken 122 und einem weiteren Nocken 126 gebildet ist.

Wie aus Fig. 2 zu erkennen, kann der Sicherungssteg 108 im Übergangsbereich zum jeweiligen Befestigungsschenkel 112 in einen Schlitz 128 der Umlenkzunge 104 eingreifen, so daß der Sicherungssteg 108 positionsgerecht gehalten wird.

In Fig. 6 erkennt man die Kugeleinfüllposition des SicherungsStegs 108. Der Sicherungssteg 108 ist dort so weit von der lasttragenden Kugellaufbahn 42 (in Fig. 6 nicht dargestellt, wohl aber in Fig. 3 u. 4)des Wagenkörpers 62 abgehoben, daß die Kugeln 34 in einer Füllstellung des Führungswagens, in welcher der Sicherungssteg 108 vertikal über der horizontal gehaltenen lasttragenden Kugellaufbahn 42 des Wagenkörpers 62 liegt, ungestört durch den Sicherungssteg 108 eingelegt werden können und nach und nach auch in den Bereich der Kugelrücklaufführung 44 und der Kugelbogenführungen 46 verschoben werden können, bis der Kugelumlauf 32 komplett ist. Dann braucht nur noch der Sicherungssteg 108 durch Ausübung eines Drucks in Pfeilrichtung 130 der Fig. 6 aus der Position nach Fig. 6 in die Position nach Fig. 2 verschoben zu werden. Die halbbogenförmigen Krümmungen 114 gehen dann zwangsläufig aus der Rinne 124 in die Rinne 118 über; der Übergang wird dabei durch die Schrägfläche 132 an dem Nocken 122 erleichtert. In der Sicherungsstellung gemäß Fig. 2 befindet sich der Sicherungssteg 108 in unmittelbarer Nähe, jedoch ohne Berührung zu den Kugeln 34, wenn diese an der lasttragenden Kugellaufbahn 42 des Wagenkörpers 62 anliegt.

Die Kugelumläufe 32 müssen in der Regel geschmiert werden, und der ihnen zugeführte mehr oder minder flüssige Schmierstoff muß im wesentlichen gegen Austritt aus den zu schmierenden Bereichen geschützt werden. Hierzu sind gemäß Fig. 3 Dichtplatten 134 vorgesehen, an denen Dichtlippen 136 angeformt sind. Die Dichtplatten 134 sind aus Kunststoff oder Kautschuk gespritzt, und die Dichtlippen 136 sind durch geringe Wandstärke so flexibel, daß sie sich im wesentlichen dicht an das Profil 16-19 der Führungsschiene 10 anlegen. Die Dichtplatten 134 werden an den von dem Wagenkörper fern gelegenen Endflächen der Endplatten 52 angelegt und dadurch verrastet, daß Rastnasen 138 der Dichtplatten 134 in Rastausnehmungen 140 der Endplatten 52 eingeschnappt werden, um dann die Endplatten 52 zu hintergreifen; dabei finden die Rastnasen 138 Platz in Ausnehmungen 142 an den Endflächen 76 der Umlenkplatten 64. In der Dichtplatte 134 sind Schmiermittelzuführbohrungen 144 vorgesehen, die im zusammengebauten Zustand mit Schmiermittel-Durchgangskanälen 146 der Endplatten 52 und Schmiermittel-Durchgangskanälen 148 der Umlenkplatten 64 fluchten. Durch Rückschlagventile kann der Ausfluß von Schmiermittel verhindert werden. Die Gefahr des Austritts von Schmiermittel besteht auch in dem Spalt zwischen den Seitenflächen 16 der Führungsschiene 10 und den Schenkelbereichen 28 des Führungswagens 20. Aus diesem Grund sind, wie aus Fig. 3 und 4 zu ersehen, an den Seitenteilen 50 des Führungswagengehäuses 48 Längsdichtungsleisten 150 angebracht, welche einstückig mit dem Führungswagengehäuse aus Kunststoff oder Kautschuk gespritzt oder gegossen sein können und durch geringe Materialstärke die zur Anschmiegung an der Führungsschiene 10 notwendige Schmiegefähigkeit erhalten. Auf diese Weise sind Schmierräume gebildet, die sich über alle der Relativbewegung von Kugeln und Kugelführungsflächen unterworfenen Schmierbedarfsstellen erstrecken und im wesentlichen abgedichtet sind. Schmiermittelverlust ist vermieden. Das unvermeidlicherweise in Berührung mit der Führungsschiene 10 tretende Schmiermittel wird durch den Führungswagen 20 immer mitgenommen, so daß außerhalb des Führungswagens 20 kein wesentlicher Schmierfilm auf der Führungsschiene 10 verbleibt.

Aus Fig. 1 erkennt man, daß die Auflagefläche 24 des Wagenkörpers 62 nach oben über das Führungswagengehäuse 48 vorspringt, so daß ein Werkzeug oder Werkstück auf der Auflagefläche 24 ohne die Positionierung störenden Kontakt mit dem Führungswagengehäuse 48 angebaut werden kann.

Eine ausreichende Präzision der Führung ist durch das Zusammenwirken des Wagenkörpers 62, der lasttragenden Kugelreihen 36 und der Führungsschiene 10 gewährleistet. Diese Teile sind in der Regel aus Stahl gefertigt. Die in der Regel aus Kunststoff gefertigten Teile, nämlich Führungswagengehäuse 48, Umlenkplatten 64 und Dichtplatten 134, unterliegen Präzisionsanforderungen nur insoweit, als ein ungestörter Lauf der Kugelumläufe 32 sichergestellt werden muß. Diese Präzision ist leicht zu erreichen, dies umso mehr, als die Formgebung der Teile 48, 64 und 134 unkompliziert ist.

Die Dichtplatten 134 dienen der zusätzlichen Sicherung der Befestigungsschenkel 112 in den Ausnehmungen 116; sie können so elastisch ausgeführt werden, daß die halbbogenförmigen Krümmungen 114 beim Überführen der Sicherungsstege 108 von der Kugelfüllstellung gemäß Fig. 6 in die Kugelsicherungsstellung gemäß Fig. 2 dennoch über die Nocken 122 hinweggleiten können, wobei eine geringfügige Auslenkung der Dichtplatten 134 eintritt.

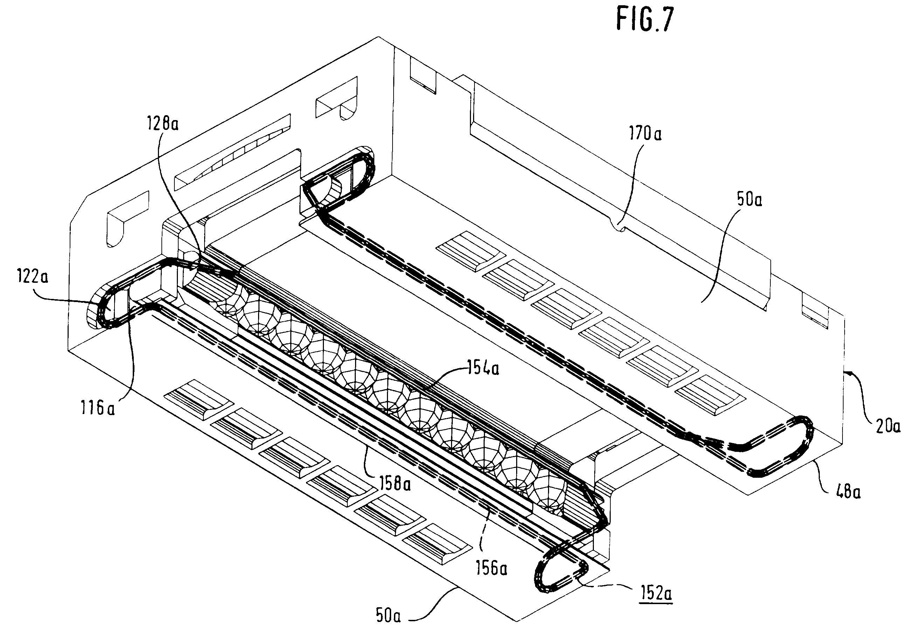

Die Ausführungsform nach Fig. 7 unterscheidet sich von derjenigen nach den Fig. 1-6 lediglich durch eine andere Gestaltung der Kugelsicherung an dem Führungswagen 20a. Die Kugelsicherung ist von einem gespannten O-Ring 152a gebildet, der in die Ausnehmung 116a eingelegt und an dem Nocken 122a eingehakt ist. Hier übernimmt der Längsabschnitt 154a des geschlossenen O-Rings 152a die Kugelsicherung und der Längsabschnitt 156a verläuft längs einer Stützfläche 158a des Seitenteils 50a, die beispielsweise an der Lippenbasis 151 der Dichtlippe 150 gemäß Fig. 4 ausgebildet sein kann. Der O-Ring 152a greift hier in die Schlitze 128a ein. Die Kugelfüllung kann hierbei einfach durch elastisches Abheben des Abschnittes 154a erfolgen. Die Ausbildung der Ausnehmung 116a könnte hier auch einfacher gestaltet werden und ist nur um der Verwendung eines übereinstimmenden Führungswagengehäuses 48a willen übereinstimmend mit der Ausbildung in den Figuren 1-6 ausgeführt.

Analoge Teile sind in Fig. 7 mit den gleichen Bezugszeichen bezeichnet wie in den Figuren 1-6 unter Hinzufügung von a.

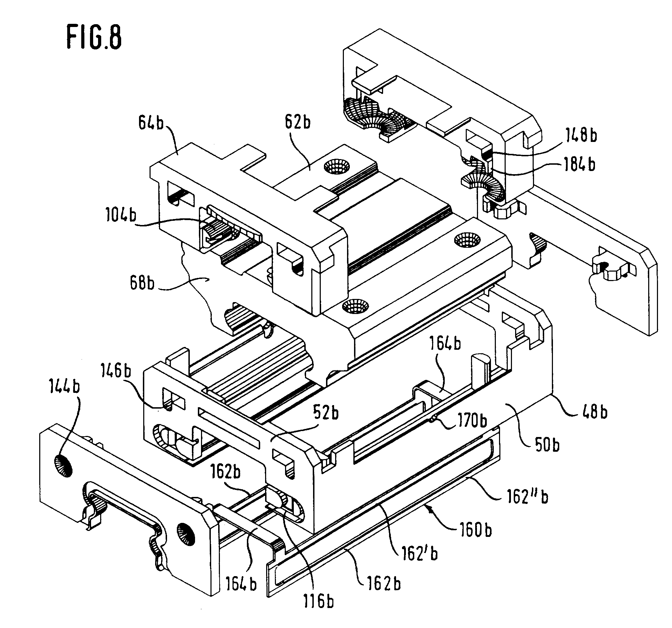

Die Ausführungsform nach Fig. 8 unterscheidet sich von derjenigen nach den Figuren 1-6 durch eine nochmals geänderte Gestaltung der Sicherungsmittel für die Kugelsicherung. Man erkennt hier einen Käfig 160b mit zwei Doppelstegen 162b, die durch Verbindungsstreifen 164b miteinander verbunden sind. Die Fixierung erfolgt hier auf den Umlenkzungen 104b, die bei der Montage des Käfigs 160b zwischen die den jeweiligen Doppelsteg bildenden Blechmaterialstreifen 162'b und 162''b eingeschnappt werden können. Die Kugeleinfüllung kann dabei durch elastisches Auslenken der Materialstreifen 162'b, 162''b erfolgen. Auf die Ausnehmungen 116b kann dann verzichtet werden, es sei denn diese werden aus Standardisierungsgründen gewünscht, um die gleichen Führungswagengehäuse 48b verwenden zu können wie in der Ausführungsform nach den Figuren 1-6.

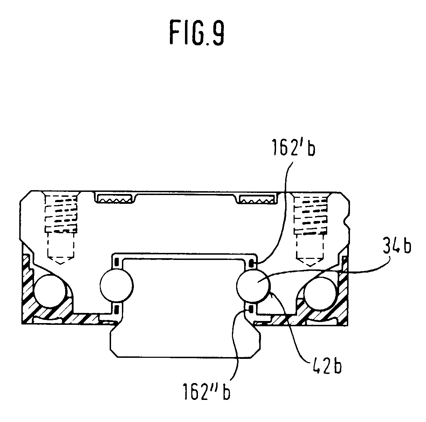

In Fig. 9 erkennt man die beiden Materialstreifen 162'b und 162''b deren Abstand geringer ist als der Kugeldurchmesser, so daß die Kugeln 34b in Eingriff mit der lasttragenden Laufbahn 42b gehalten sind.

Analoge Teile sind auch hier mit den gleichen Bezugszeichen versehen wie in den Figuren 1-6 jeweils ergänzt um b.

Die erfindungsgemäße Linearführungseinheit kann auch mit zwei übereinander liegenden Paaren oder drei übereinander liegenden Paaren von Kugelumlaufführungen hergestellt werden.

Die Laufbahnen 42 können gehärtet sein. Die Umlenkzungen 104 können auch als Umlenkschaufeln verstanden werden, die gewünschtenfalls schaufelartig an den tragenden Laufbahnen 18-18' der Führungsschiene anliegen und Schmiermittel aus diesen herausschaufeln und an die Bogenführungen 46 weitergeben können.

Die Sicherungsstege 108 und deren Befestigungsteile können aus Federstahldraht, Federstahlblech oder elastischem Werkstoff bestehen.

Die Dichtlippen 136 können im Falle der Ausführungsform nach Figur 7 auch durch die O-Ringabschnitte 156a gebildet sein.

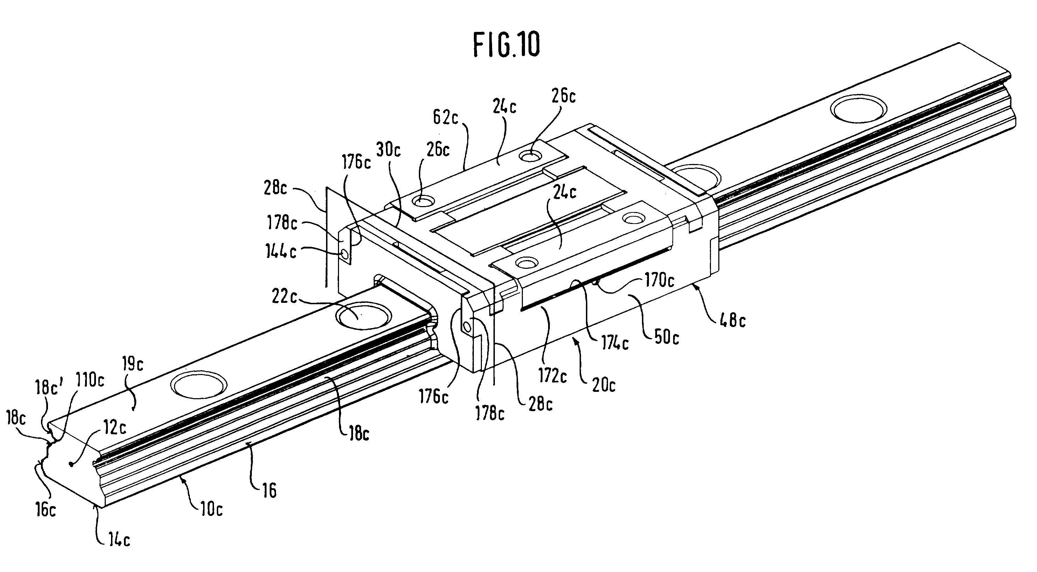

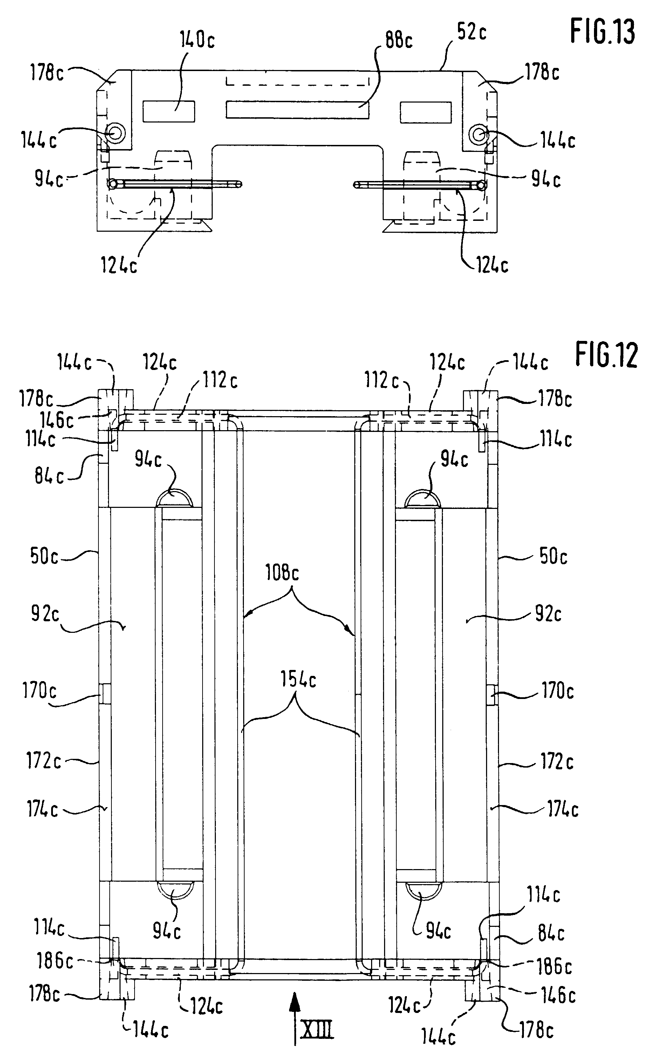

Die Fig. 10- 13 zeigen eine bezüglich der Fig. 1 - 6 etwas abgeänderte Ausführungsform der Linearführungseinrichtung.

Analoge Teile sind mit den gleichen Bezugszeichen versehen wie in den Fig. 1-6 zuzüglich c.

In den Fig. 10 - 12 erkennt man eine an dem Seitenteil 50c des Führungswagengehäuses 48c ausgebildete Schmiermittelzuführbohrung 170c, durch welche Schmiermittel zu der Rücklaufführungsbahn 92c geführt werden kann. Die Schmiermittelzuführbohrung 170c ist im Stoßbereich zwischen einem Rand 172c des Seitenteils 50c des Führungswagengehäuses 48c und einem anschließenden Bereich des Wagenkörpers 62c in der Oberkante 174c des Seitenteils 50c gebildet. Die Schmiermittelzuführbohrung 170c ist im zusammengebauten Zustand des Führungswagens 20c nach oben hin vom Wagenkörper 62c begrenzt.

Die Schmiermittelzuführbohrung 170c verläuft geradlinig in einer zur Achse 12c (Fig. 10) orthogonalen Ebene. Gewünschtenfalls können mehrere Schmiermittelzuführbohrungen 170c an dem jeweiligen Seitenteil 50c vorgesehen werden. Ferner kann die Schmiermittelzuführbohrung 170c auch von einer in dem Seitenteil 50c ausgebildeten Bohrung gebildet sein, die in die Rücklaufführungsbahn 92c mündet. Durch Rückschlagventile kann der Ausfluß von Schmiermittel verhindert werden.

Die mit Bezug auf Fig. 10 - 12 beschriebenen Schmiermittelzuführbohrungen 170c finden sich auch in den bereits beschriebenen Ausführungsformen, wo sie mit analogen Bezugszeichen bezeichnet sind.

Bei der nachfolgenden Beschreibung der Ausführungsform nach den Fig. 10 - 13 wird lediglich auf die Unterschiede zwischen dieser Ausführungsform und der Ausführungsform nach den Fig. 1 - 6 eingegangen, nämlich auf eine andere Ausbildung von Dichtplatte 134c und Endplatte 52c des Führungswagengehäuses 48c sowie auf eine andere Gestaltung des Sicherungsstegs 108c. Analoge Teile sind dabei in den Fig. 10 - 13 mit den gleichen Bezugszeichen bezeichnet wie in den Fig. 1 - 6 unter Hinzufügung von c.

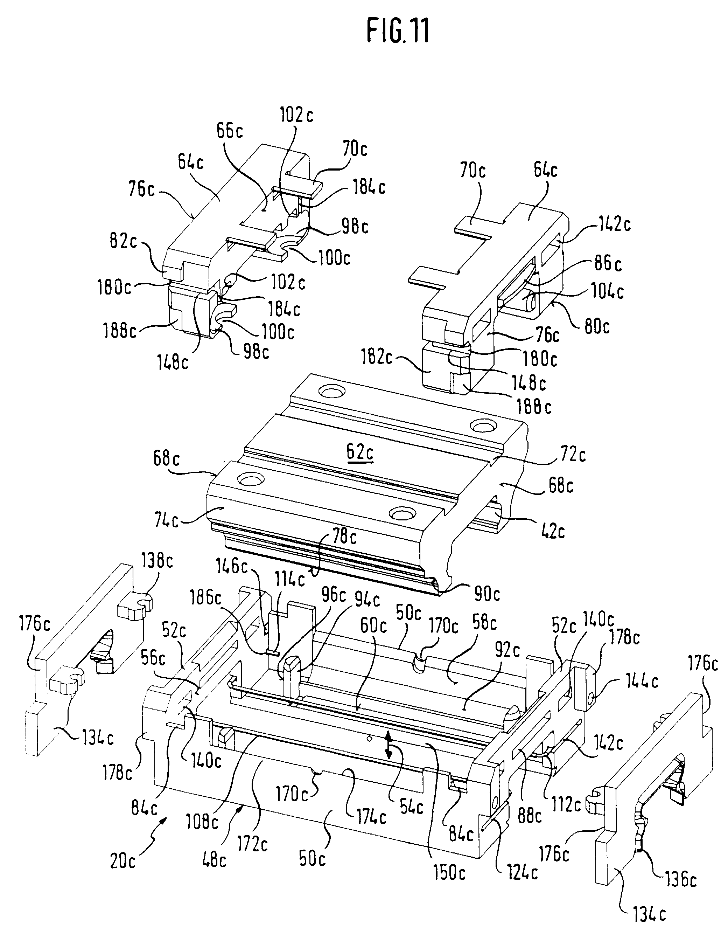

In den Fig. 10 und 11 ist zu erkennen, daß die an der vom Wagenkörper 62c fern gelegenen Endfläche der Endplatte 52c angebrachte Dichtplatte 134c seitliche Aussparungen 176c aufweist. In diese Aussparungen 176c ragen an der Endplatte 52c des Führungswagengehäuses 48c in Achsrichtung vom Wagenkörper 62c wegstehende Vorsprünge 178c hinein. Diese Vorsprünge 178c sind zu den Aussparungen 176c komplementär ausgebildet, so daß sie die Aussparungen 176c vollständig ausfüllen.

Bei der Ausführungsform nach Fig. 10 - 13 ist die Schmiermittelzuführbohrung 144c in dem Vorsprung 178c an der Endplatte 52c ausgebildet. Die Schmiermittelzuführbohrung 144c setzt sich als die Endplatte 52c durchsetzender Schmiermittel-Durchgangskanal 146c fort. Der Schmiermitteldurchgangskanal 146c durchsetzt die Endplatte 52c in Achsrichtung und fluchtet anschließend mit dem Schmiermittel-Durchgangskanal 148c in der Umlenkplatte 64c. Dieser Schmiermittel-Durchgangskanal 148c ist als offene Schmiermittelnut 180c in einer zur Achse 12c parallelen Endfläche 182c der Umlenkplatte 64c gebildet. Im zusammengebauten Zustand des Führungswagens 20c ist die Schmiermittelnut 180c durch das anliegende Seitenteil 50c des Führungswagengehäuses 48c abgedeckt.

Die Einmündung in die Rinne 98c der Kugelbogenführung ist gebildet von einer Rinne 184c, welche den Wälzkörperumlauf nahen Endabschnitt des Schmiermittel-Durchgangskanals 148c darstellt. Die Rinne 184c ist in der Umlenkplatte 64c gebildet und zum Wagenkörper 62c hin offen, wird jedoch im zusammengebauten Zustand des Führungswagens 20c durch die Anlage an die zugehörige achsnahe Endfläche 68c des Wagenkörpers 62c abgedeckt. Im zusammengebauten Zustand fluchtet also die Schmiermittelzuführbohrung 144c mit dem Schmiermittel-Durchgangskanal 146c der Endplatte 52c und dem Schmiermittel-Durchgangskanal 148c der Umlenkplatte 64c, die jeweils in Achsrichtung 12c verlaufen.

Auch die abgeänderte Gestaltung des Sicherungsmittels ist in den Fig. 11 - 13 zu erkennen.

Der Sicherungssteg 108c ist wie der Sicherungssteg 108 (Fig. 1 - 6) aus einem Drahtstück gebildet. Im Gegensatz zu dem Sicherungssteg 108 weist der Sicherungssteg 108c am Ende seiner orthogonalen Befestigungsschenkel 112c jeweils einen Sicherungsschenkel 114c auf. Die Sicherungsschenkel 114c verlaufen parallel zur Achse 12c und weisen aufeinanderzu.

Die Befestigungsschenkel 112c sind jeweils in reliefartigen Aufnahmeschlitzen 124c an den Endplatten 52c versenkt. Der Sicherungssteg 108c wird am Führungswagengehäuse 48c befestigt, wie am besten in Fig. 11 zu erkennen. Die Sicherungsschenkel 114c sind jeweils in Sicherungsschenkel-Aufnahmeausnehmungen 186c eingesteckt und durchsetzen diese. Im zusammengebauten Zustand tauchen die Sicherungsschenkel 114c in an der Umlenkplatte 64c seitlich ausgebildete Sicherungsschenkel-Aufnahmeausnehmungen 188c ein.

Die Kugelfüllung kann bei dieser Ausführungsform durch Auslenken des Sicherungsstegabschnitts 154c, insbesondere im jeweils mittleren Bereich, erfolgen. Die vorstehend beschriebene Ausführungsform des Sicherungsstegs 108c zeichnet sich insbesondere durch einen guten Festsitz des Sicherungsstegs 108c aus.

## Patentansprüche

1. Linearführungseinrichtung umfassend eine Führungsschiene (10) mit einer Achse (12) und mindestens einen auf dieser Führungsschiene (10) in Richtung der Achse (12) beweglichen Führungswagen (20), welcher unter Vermittlung mindestens eines endlosen Wälzkörperumlaufs (32) an der Führungsschiene (10) geführt ist,
dieser Wälzkörperumlauf (32) bestehend aus einer tragenden Wälzkörperreihe (36) in gleichzeitigem Eingriff mit einer tragenden Wälzkörperlaufbahn (18-18') der Führungsschiene (10) und einer tragenden Wälzkörperlaufbahn (42) des Führungswagens (20), aus einer rücklaufenden Wälzkörperreihe (38) in einer Wälzkörperrücklaufführung (44) des Führungswagens (20) und aus Wälzkörperbogenreihen (40), welche die tragende Wälzkörperreihe (36) und die rücklaufende Wälzkörperreihe (38) an deren Enden miteinander verbinden und in Wälzkörperbogenführungen (46) des Führungswagens (20) geführt sind,
wobei der Führungswagen (20) ausgeführt ist mit einem Führungswagengehäuse (48) und mit einem innerhalb des Führungswagengehäuses (48) untergebrachten, von dem Führungswagengehäuse (48) gesondert hergestellten Wagenkörper (62),
wobei weiter das Führungswagengehäuse (48) zur Achsrichtung im wesentlichen parallele und dem Wälzkörperumlauf (32) benachbarte Seitenteile (50) umfaßt und ferner zur Achsrichtung im wesentlichen orthogonale und jeweils einer der Wälzkörperbogenreihen (40) benachbarte Endplatten (52) umfaßt,
wobei weiter die tragende Wälzkörperrreihe (36) an dem Wagenkörper (62) geführt ist,
und wobei in axialer Richtung zwischen dem Wagenkörper (62) und der jeweiligen Endplatte (52) je ein gesondert von dem Wagenkörper (62) und dem Führungswagengehäuse (48) hergestellter Bogenführungsbegrenzungskörper (64) eingesetzt ist,
dadurch gekennzeichnet,
daß das Führungswagengehäuse (48) einen Positionierungsschacht (54) bildet, der bei Einführung des Wagenkörpers (62) und der - als Umlenkkörper (64) mit Bogenführungsflächen (98) der jeweiligen Wälzkörperbogenführung ausgebildeten - Bogenführungsbegrenzungskörper (64) den Wagenkörper (62), die Umlenkkörper (64) und das Führungswagengehäuse (48) zueinander funktionsgerecht positioniert und daß Schnappverbindungsmittel (86,88) vorgesehen sind, welche den Wagenkörper (62) und die Umlenkkörper (64) in dieser Positionierung am Führungswagengehäuse (48) sichern.

2. Linearführungseinrichtung nach Anspruch 1,
dadurch gekennzeichnet,
daß an zwei voneinander beabstandeten Seitenflächen (16) der Führungsschiene (10) je mindestens ein Wälzkörperumlauf (32) vorgesehen ist und daß das Führungswagengehäuse (48) beidseits der Führungsschiene (10) je ein Seitenteil (50) aufweist.

3. Linearführungseinrichtung nach Anspruch 1 oder 2,
dadurch gekennzeichnet,
daß der Wagenkörper (62) und die Umlenkkörper (64) in zur Achsrichtung der Schiene (10) orthogonaler Richtung (54) in das Führungswagengehäuse (48) einschiebbar und dort befestigbar sind.

4. Linearführungseinrichtung nach einem der Ansprüche 1 - 3,
dadurch gekennzeichnet,
daß eine radial innere Führungsfläche (96) der Wälzkörperbogenführung (46) an dem Führungswagengehäuse (48) angebracht ist und weitere, vorzugsweise alle weiteren, Führungsflächen (98) der Wälzkörperbogenführung (46) an dem zugehörigen Umlenkkörper (64) angebracht sind.

5. Linearführungseinrichtung nach einem der Ansprüche 1 - 4,
dadurch gekennzeichnet,
daß die Seitenteile (50) mit den Endplatten (52) einstückig hergestellt sind.

6. Linearführungseinrichtung nach Anspruch 5,
dadurch gekennzeichnet,
daß die Seitenteile (50) zusammen mit den Endplatten (52) aus gieß- oder spritzbarem Material, insbesondere Kunststoff, einstückig hergestellt sind.

7. Linearführungseinrichtung nach einem der Ansprüche 1 - 6,
dadurch gekennzeichnet,
daß die Umlenkkörper (64) aus gieß- oder spritzbarem Material, vorzugsweise einstückig, hergestellt sind, insbesondere aus Kunststoff.

8. Linearführungseinrichtung nach einem der Ansprüche 1 - 7,
dadurch gekennzeichnet,
daß der Wagenkörper (62) als ein Profilkörper ausgeführt ist, welcher - in Schnittebenen orthogonal zur Achsrichtung betrachtet - im wesentlichen über seine gesamte zur Achsrichtung parallele Längserstreckung konstantes Profil besitzt.

9. Linearführungseinrichtung nach einem der Ansprüche 1 - 8,
dadurch gekennzeichnet,
daß die Wälzkörperrücklaufführung (44) durch zusammenwirkende Rücklaufführungsflächen (90,92) des Wagenkörpers (62) und des Führungswagengehäuses (48) gebildet ist.

10. Linearführungseinrichtung nach einem der Ansprüche 1 - 9,
dadurch gekennzeichnet,
daß an dem Führungswagengehäuse (48), an dem Wagenkörper (62) oder/und an mindestens einem der Umlenkkörper (64) Positionierungsflächen (56,58,60,66,68,74,76,78) angeformt sind, welche beim Einbau des Wagenkörpers (62) bzw. der Umlenkkörper (64) in das Führungswagengehäuse (48) für eine funktionsgerechte Positionierung dieser Teile relativ zueinander sorgen.

11. Linearführungseinrichtung nach einem der Ansprüche 1 - 10,
dadurch gekennzeichnet,
daß bei Ausführung des Führungswagens (20) mit mindestens einem Paar von Wälzkörperumläufen (32), die zu beiden Seiten der Führungsschiene (10) liegen, und bei Ausführung des Führungswagengehäuses (48) in Form eines Rechteckrahmens mit zwei Seitenteilen (50) und zwei Endplatten (52) durch die Seitenteile (50) und die Endplatten (52) der Positionierungsschacht (54) gebildet ist, welcher die Einführung des Wagenkörpers (62) oder/und der Umlenkkörper (64) in einer Einführungsrichtung gestattet, welche Einführungsrichtung annähernd orthogonal zur Schienenachse (12) und zu einer Schleifenebene der Wälzkörperumläufe (32) ist.

12. Linearführungseinrichtung nach einem der Ansprüche 1 - 11,
dadurch gekennzeichnet,
daß der Positionierungsschacht (54) der Einführung des Wagenkörpers (62) und der Umlenkkörper (64) im Sinne einer Annäherung an die Achse (12) dienende Einführungsflächen (56,58) und eine die Einführung begrenzende Bodenfläche (60) besitzt und daß an der Bodenfläche (60) mindestens ein Umlenkstück (94) einer Wälzkörperbogenführung (46) vorzugsweise einstückig angebracht ist, welches eine zu einer Schleifenebene eines zugehörigen Wälzkörperumlaufs (32) im wesentlichen orthogonale radial innere Bogenführungsfläche (96) für diesen Wälzkörperumlauf (32) bildet.

13. Linearführungseinrichtung nach Anspruch 12,
dadurch gekennzeichnet,
daß in einer dem Wagenkörper (62) zugekehrten Anlagefläche (66) mindestens eines Umlenkkörpers (64) eine teilbogenförmige Führungsrinne (98) für die Wälzkörper (34) einer Bogenwälzkörperreihe (40) versenkt angeordnet ist, welche im wesentlichen konzentrisch zu der Bogenführungsfläche (96) ist.

14. Linearführungseinrichtung nach einem der Ansprüche 12 und 13,
dadurch gekennzeichnet,
daß an mindestens einem Umlenkkörper (64) als Teil der Wälzkörperbogenführung (46) eine Umlenkzunge (104) angeformt ist, welche im wesentlichen tangential auf eine zugehörige tragende Wälzkörperlaufbahn (18-18') der Führungsschiene (10) zuläuft.

15. Linearführungseinrichtung nach einem der Ansprüche 1 - 14,
dadurch gekennzeichnet,
daß die Wälzkörper (34) der tragenden Wälzkörperreihe (36) an dem Führungswagen (20) auch dann gegen Verlust gesichert sind, wenn der Führungswagen (20) von der Führungsschiene (10) abgezogen ist.

16. Linearführungseinrichtung nach Anspruch 15,
dadurch gekennzeichnet,
daß die Wälzkörper (34) der tragenden Wälzkörperreihe (36) in dem Führungswagen (20) durch mindestens einen Sicherungssteg (108) gegen Verlust gesichert sind, welcher sich im wesentlichen parallel zur Achse (12) der Führungsschiene (10) erstreckt.

17. Linearführungseinrichtung nach Anspruch 16,
dadurch gekennzeichnet,
daß der Sicherungssteg (108) gesondert von den Umlenkkörpern (64) und dem Führungswagengehäuse (48) hergestellt ist.

18. Linearführungseinrichtung nach Anspruch 16 oder 17,
dadurch gekennzeichnet,
daß der Sicherungssteg (108) an mindestens einem seiner Enden mit einem zur Achse (12) im wesentlichen orthogonalen Befestigungsschenkel (112) versehen ist, welcher an einem zur Achse (12) im wesentlichen orthogonalen Teil des Führungswagens (20) sicherbar ist, vorzugsweise einer Endplatte (52).

19. Linearführungseinrichtung nach Anspruch 18,
dadurch gekennzeichnet,
daß der Sicherungssteg (108) mit zwei Befestigungsschenkeln (112) im wesentlichen U-förmig ausgebildet ist.

20. Linearführungseinrichtung nach einem der Ansprüche 16 - 19,
dadurch gekennzeichnet,
daß der Sicherungssteg (108) zwischen einer Sicherungsstellung (Fig. 2) und einer Kugeleinfüllstellung (Fig. 6) verstellbar ist, vorzugsweise im wesentlichen orthogonal zur Achse (12).

21. Linearführungseinrichtung nach einem der Ansprüche 18 - 20,
dadurch gekennzeichnet,
daß für den Befestigungsschenkel (112) an der Endplatte (52) neben einer der Sicherungsstellung (Fig. 2) des Sicherungsstegs (108) entsprechenden ersten Rastposition eine der Kugeleinfüllstellung (Fig. 6) des Sicherungsstegs (108) entsprechende zweite Rastposition vorgesehen ist.

22. Linearführungseinrichtung nach Anspruch 21,
dadurch gekennzeichnet,
daß der Befestigungsschenkel (112) von der zweiten Rastposition (Fig. 6) in die erste Rastposition (Fig. 2) durch Druckeinwirkung überführbar ist und in der ersten Rastposition (Fig. 2) selbsttätig verrastet.

23. Linearführungseinrichtung nach einem der Ansprüche 16 - 22,
dadurch gekennzeichnet,
daß die tragende Wälzkörperlaufbahn (18-18') der Führungsschiene (10) von zwei Teillaufbahnen (18,18') gebildet ist, welche durch eine Aufnahmenut (110) für den Sicherungssteg (108) voneinander getrennt sind.

24. Linearführungseinrichtung nach einem der Ansprüche 16 - 23,
dadurch gekennzeichnet,
daß der Sicherungssteg (108) im Übergangsbereich von der tragenden Wälzkörperreihe (36) zu einer Bogenwälzkörperreihe (40) über eine Außenfläche einer Umlenkzunge (104) für die Wälzkörper (34) verläuft, welche Außenfläche einer Umlenkfläche (106) der Umlenkzunge (104) abgekehrt ist.

25. Linearführungseinrichtung nach einem der Ansprüche 16 - 22,
dadurch gekennzeichnet,
daß zwei Sicherungsstege (162'b,162''b) an der lasttragenden Wälzkörperreihe (36) beidseits ihrer Berührungslinie mit der lasttragenden Wälzkörperlaufbahn (18b) der Führungsschiene (10) anliegen.

26. Linearführungseinrichtung nach einem der Ansprüche 1 - 25,
dadurch gekennzeichnet,
daß an einem Seitenteil (50) des Führungswagengehäuses (48) eine Längsdichtung (150) in dichtender Position gegenüber der Führungsschiene (10) angebracht ist.

27. Linearführungseinrichtung nach einem der Ansprüche 1 - 26,
dadurch gekennzeichnet,
daß an einer von dem Wagenkörper (62) abgewandten Seite mindestens einer Endplatte (52) mindestens eine Dichtungsanordnung (134) in Dichtungsposition gegenüber einem Profil der Führungsschiene (10) angebracht ist.

28. Linearführungseinrichtung nach Anspruch 27,
dadurch gekennzeichnet,
daß die Dichtungsanordnung (134) als Dichtplatte mit einer an dem Profil der Führungsschiene (10) anliegenden Dichtlippe (136) ausgebildet ist.

29. Linearführungseinrichtung nach einem der Ansprüche 1 - 28,
dadurch gekennzeichnet,
daß mindestens einer der Umlenkkörper (64) unmittelbar an seiner zugehörigen Endplatte (52) durch Schnappverbindungsmittel (86,88) sicherbar ist und seinerseits die Sicherung des Wagenkörpers (62) innerhalb des Führungwagengehäuses (48) durch den Wagenkörper (62) übergreifende Vorsprünge (70) übernimmt.

30. Linearführungseinrichtung nach einem der Ansprüche 27 - 29,
dadurch gekennzeichnet,
daß die Dichtungsanordnung (134) an dem Führungswagengehäuse (48) durch Schnappverbindungsmittel (138,140) gesichert ist.

31. Linearführungseinrichtung nach einem der Ansprüche 1 - 30,
dadurch gekennzeichnet,
daß der Wagenkörper (62) zur Anbringung einer durch ihn längs der Führungsschiene (10) geführten Baueinheit ausgebildet ist.

32. Linearführungseinrichtung nach Anspruch 31,
dadurch gekennzeichnet,
daß an dem Wagenkörper (62) mindestens eine über das Führungswagengehäuse (48) vorspringende Anlagefläche (24) für die Baueinheit ausgebildet ist.

33. Linearführungseinrichtung nach einem der Ansprüche 1-32,
dadurch gekennzeichnet,
daß der Führungswagen mit mindestens einer von außen zugänglichen Schmiermittelzuführbohrung (144,144b,144c;170,170a,170b,170c) versehen ist.

34. Linearführungseinrichtung nach Anspruch 33,
dadurch gekennzeichnet,
daß die bzw. mindestens eine der Schmiermittelzuführbohrungen (144,144b,144c;170,170a,170b,170c) mit Rückschlagventilen versehen ist bzw. sind.

35. Linearführungseinrichtung nach einem der Ansprüche 1-34,
dadurch gekennzeichnet,
daß mindestens eine Schmiermittelzuführbohrung (144c) an dem Führungswagen (20c) im Bereich mindestens einer Endplatte (52c) angeordnet ist.

36. Linearführungseinrichtung nach Anspruch 35,
dadurch gekennzeichnet,
daß die Schmiermittelzuführbohrung (144,144b,144c) über mindestens einen sich in Achsrichtung über eine Endplatte (52,52b,52c) und einen Umlenkkörper (64,64b,64c) hinweg erstreckenden Schmiermittel-Durchgangskanal (146,148;146b,148b;146c,148c) mit dem Wälzkörperumlauf (32) verbunden ist.

37. Linearführungseinrichtung nach Anspruch 36,
dadurch gekennzeichnet,
daß der Schmiermittel-Durchgangskanal (148,148b,148c) im Bereich der Wälzkörperbogenreihe (40) in den Wälzkörperumlauf (32) einmündet.

38. Linearführungseinrichtung nach Anspruch 36 oder 37,
dadurch gekennzeichnet,
daß der Schmiermittel-Durchgangskanal (146,146b,146c) die Endplatte (52,52b,52c) durchsetzt.

39. Linearführungseinrichtung nach einem der Ansprüche 36-38,
dadurch gekennzeichnet,
daß der Schmiermittel-Durchgangskanal (148,148b,148c) den Umlenkkörper (64,64b,64c) durchsetzt.

40. Linearführungseinrichtung nach einem der Ansprüche 36-38,
dadurch gekennzeichnet,
daß der Schmiermittel-Durchgangskanal (148c) im Überbrükkungsbereich des Umlenkkörpers (64c) als offene Schmiermittelnut (180c) in einer zur Achse (12c) parallelen Endfläche (182c) des Umlenkkörpers (64c) gebildet ist, wobei diese Schmiermittelnut (180c) durch das anliegende Seitenteil (50c) des Führungswagengehäuses (48c) abgedeckt ist.

41. Linearführungseinrichtung nach einem der Ansprüche 36-40,
dadurch gekennzeichnet,
daß der Schmiermittel-Durchgangskanal (148,148b,148c) einen der Einmündung in den jeweiligen Wälzkörperumlauf (32) nahen Endabschnitt aufweist, welcher durch eine zum Wagenkörper (62,62b,62c) hin offenliegende Rinne (184,184b,184c) der Endplatte gebildet ist, wobei diese offenliegende Rinne (184,184b,184c) durch die Anlage an einer zugehörigen, achsnormalen Endfläche (68,68b,68c) des Wagenkörpers (62,62b,62c) abgedeckt ist.

42. Linearführungseinrichtung nach einem der Ansprüche 36-41,
dadurch gekennzeichnet,
daß der Schmiermittel-Durchgangskanal (146) einen der Schmiermittelzuführbohrung (144) nahen Endabschnitt aufweist, welcher eine an der Endplatte (52) anliegende Dichtplatte (134) durchsetzt.

43. Linearführungseinrichtung nach einem der Ansprüche 36-41,
dadurch gekennzeichnet,
daß die Schmiermittelzuführbohrung (144c) an der Endplatte (52c) angebracht ist und zwar - sofern an dieser Endplatte (52c) eine Dichtplatte (134c) angebracht ist - in einem von der Dichtplatte (134c) nicht überdeckten Bereich (178c).

44. Linearführungseinrichtung nach Anspruch 43,
dadurch gekennzeichnet,
daß die Dichtplatte (134c) eine Aussparung (176c) aufweist und daß an der Endplatte (52c) ein in Achsrichtung vom Wagenkörper (62c) weg vorstehender Vorsprung (178c) angeordnet ist, dessen vom Wagenkörper (62c) abgelegene Endfläche die Schmiermittelzuführbohrung (144c) aufweist.

45. Linearführungseinrichtung nach Anspruch 44,
dadurch gekennzeichnet,
daß der Vorsprung (178c) wenigstens teilweise von einer Randaussparung (176c) der Dichtplatte (134c) aufgenommen ist.

46. Linearführungseinrichtung nach Anspruch 45,
dadurch gekennzeichnet,
daß der Vorsprung (178c) zur Randaussparung (176c) der Dichtplatte (134c) im wesentlichen komplementär ist.

47. Linearführungseinrichtung nach einem der Ansprüche 33-46,
dadurch gekennzeichnet,
daß mindestens eine Schmiermittelzuführbohrung (170,170a,170b,170c) im Bereich des Seitenteils (50,50a,50b,50c) und/oder einer parallel zu dem Seitenteil (50,50a,50b,50c) laufenden Seitenfläche des Führungswagens (20,20a,20c) angeordnet ist.

48. Linearführungseinrichtung nach Anspruch 47,
dadurch gekennzeichnet,
daß die Schmiermittelzuführbohrung (170,170a,170b,170c) im Stoßbereich zwischen einem Rand des Seitenteils (50,50a,50b,50c) und einem anschließenden Bereich des Wagenkörpers (62,62a,62b,62c) angeordnet ist.

49. Linearführungseinrichtung nach einem der Ansprüche 47 und 48,
dadurch gekennzeichnet,
daß die Schmiermittelzuführbohrung (170,170a,170b,170c) in einer zur Achse (12,12c) im wesentlichen orthogonalen Ebene - vorzugsweise geradlinig - zu der rücklaufenden Wälzkörperreihe (38) führt.

50. Linearführungseinrichtung nach einem der Ansprüche 18 - 49,
dadurch gekennzeichnet,
daß der Sicherungssteg (108c) am Ende mindestens eines orthogonalen Befestigungsschenkels (112c) einen Sicherungsschenkel (114c) aufweist, welcher im wesentlichen parallel zur Achse (12c) ist und in eine Sicherungsschenkel-Aufnahmeausnehmung (186c) der jeweiligen Endplatte (52c) und gewünschtenfalls auch des jeweiligen Umlenkkörpers (64c) sichernd eintaucht.

51. Linearführungseinrichtung nach einem der Ansprüche 18-50,
dadurch gekennzeichnet,
daß der Befestigungsschenkel (108c) in einem reliefartigen Aufnahmeschlitz (124c) der zugehörigen Endplatte (52c) und/oder einer anliegenden Dichtplatte (134c) aufgenommen ist.

## Claims

1. Linear guide device comprising a guide rail (10) with an axis (12) and at least one guide carriage (20), which can move on this guide rail (10) in the direction of the axis (12) and which is guided on the guide rail (10) via at least one continuous rolling body circuit (32),
this rolling body circuit (32) consisting of a load-bearing row of rolling bodies (36) in simultaneous engagement with a load-bearing rolling body track (18-18') of the guide rail (10) and a load-bearing rolling body track (42) of the guide carriage (20), of a returning row of rolling bodies (38) in a rolling body return guide (44) of the guide carriage (20) and of curved rows of rolling bodies (40) which connect the load-bearing row of rolling bodies (36) and the returning row of rolling bodies (38) together at their ends and are guided in curved rolling body guides (46) of the guide carriage (20),
wherein the guide carriage (20) is constructed with a guide carriage housing (48) and with a carriage body (62) which is accommodated within the guide carriage housing (48) and produced separately from the guide carriage housing (48), wherein the guide carriage housing (48) also comprises side parts (50), which are substantially parallel to the axial direction and adjacent to the rolling body circuit (32), and end plates (52), which are substantially orthogonal to the axial direction and each adjacent to one of the curved rows of rolling bodies (40),
wherein the load-bearing row of rolling bodies (36) is guided on the carriage body (62),
and wherein a respective curved guide boundary body (64), which is produced separately from the carriage body (62) and the guide carriage housing (48), is inserted in the axial direction between the carriage body (62) and the respective end plate (52),
characterised in that the guide carriage housing (48) forms a positioning shaft (54) which, upon the carriage body (62) and the curved guide boundary bodies (64) - which are formed as deflection bodies (64) with curved guide faces (98) of the respective curved rolling body guide - being introduced, positions the carriage body (62), the deflection bodies (64) and the guide carriage housing (48) in a functionally adapted manner relative to one another, and that snap connection means (86, 88) are provided which secure the carriage body (62) and the deflection bodies (64) in this position at the guide carriage housing (48).

2. Linear guide device according to Claim 1,
characterised in that at least one respective rolling body circuit (32) is provided at two mutually spaced side faces (16) of the guide rail (10), and that the guide carriage housing (48) has a respective side part (50) on both sides of the guide rail (10).

3. Linear guide device according to Claim 1 or 2,
characterised in that the carriage body (62) and the deflection bodies (64) can be inserted in the guide carriage housing (48) in a direction (54) which is orthogonal to the axial direction of the rail (10) and fastened there.

4. Linear guide device according to any one of Claims 1 - 3,
characterised in that a radially inner guide face (96) of the curved rolling body guide (46) is located on the guide carriage housing (48), and additional, preferably all additional guide faces (98) of the curved rolling body guide (46) are located on the associated deflection bodies (64).

5. Linear guide device according to any one of Claims 1 - 4,
characterised in that the side parts (50) are made in one piece with the end plates (52).

6. Linear guide device according to Claim 5,
characterised in that the side parts (50) are made in one piece together with the end plates (52) of a castable or an injection-mouldable material, in particular a plastics material.

7. Linear guide device according to any one of Claims 1 - 6,
characterised in that the deflection bodies (64) are made of a castable or an injection-mouldable material, in particular a plastics material, preferably in one piece.

8. Linear guide device according to any one of Claims 1 - 7,
characterised in that the carriage body (62) is constructed as a profiled body which - considered in sectional planes orthogonally to the axial direction - has a constant profile substantially over its entire longitudinal extent, which is parallel to the axial direction.

9. Linear guide device according to any one of Claims 1 - 8,
characterised in that the rolling body return guide (44) is formed by co-operating return guide faces (90, 92) of the carriage body (62) and of the guide carriage housing (48).

10. Linear guide device according to any one of Claims 1 - 9,
characterised in that positioning faces (56, 58, 60, 66, 68, 74, 76, 78) are formed on the guide carriage housing (48), on the carriage body (62) or/and on at least one of the deflection bodies (64), which positioning faces ensure, when the carriage body (62) or the deflection bodies (64) are fitted in the guide carriage housing (48), that these parts are positioned in a functionally adapted manner relative to one another.

11. Linear guide device according to any one of Claims 1 - 10,
characterised in that, with the guide carriage (20) being constructed with at least one pair of rolling body circuits (32) lying on both sides of the guide rail (10), and the guide carriage housing (48) being constructed in the form of a rectangular frame with two side parts (50) and two end plates (52), the positioning shaft (54) is formed by the side parts (50) and the end plates (52), which shaft allows the carriage body (62) and/or the deflection bodies (64) to be introduced in one direction of introduction, which direction is approximately orthogonal to the rail axis (12) and to a loop plane of the rolling body circuits (32).

12. Linear guide device according to any one of Claims 1 - 11,
characterised in that the positioning shaft (54) has introduction faces (56, 58), which serve to introduce the carriage body (62) and the defection bodies (64) in the sense of an approach to the axis (12), and a bottom face (60), which limits the introduction, and that at least one deflection piece (94) of a curved rolling body guide (46) is located, preferably in one piece, on the bottom face (60), which defection piece (94) forms a radially inner curved guide face (96), which is substantially orthogonal to a loop plane of an associated rolling body circuit (32), for this rolling body circuit (32).

13. Linear guide device according to Claim 12,
characterised in that a partially curved guide trough (98) for the rolling bodies (34) of a curved row of rolling bodies (40) is sunk in a contact face (66), which is turned towards the carriage body (62), of at least one deflection body (64), which trough is substantially concentric with the curved guide face (96).

14. Linear guide device according to either of Claims 12 and 13,
characterised in that a deflection tongue (104) is formed on at least one deflection body (64) as part of the curved rolling body guide (46), which tongue runs substantially tangentially up to an associated load-bearing rolling body track (18-18') of the guide rail (10).

15. Linear guide device according to any one of Claims 1 - 14,
characterised in that the rolling bodies (34) of the load-bearing row of rolling bodies (36) are secured to the guide carriage (20) against loss even when the guide carriage (20) is removed from the guide rail (10).

16. Linear guide device according to Claim 15,
characterised in that the rolling bodies (34) of the load-bearing row of rolling bodies (36) are secured in the guide carriage (20) against loss by at least one securing crosspiece (108), which extends substantially parallel to the axis (12) of the guide rail (10).

17. Linear guide device according to Claim 16,
characterised in that the securing crosspiece (108) is produced separately from the deflection bodies (64) and the guide carriage housing (48).

18. Linear guide device according to Claim 16 or 17,
characterised in that the securing crosspiece (108) is provided at least at one of its ends with a fastening arm (112) which is substantially orthogonal to the axis (12) and can be secured to a part of the guide carriage (20) which is substantially orthogonal to the axis (12).

19. Linear guide device according to Claim 18,
characterised in that the securing crosspiece (108) is formed with two fastening arms (112) so as to be substantially U-shaped.

20. Linear guide device according to any one of Claims 16 - 19,
characterised in that the securing crosspiece (108) can be displaced between a securing position (Figure 2) and a ball loading position (Figure 6), preferably substantially orthogonally to the axis (12).

21. Linear guide device according to any one of Claims 18 - 20,
characterised in that a second lock-in position, which corresponds to the ball loading position (Figure 6) of the securing crosspiece (108), is provided for the securing arm (112) at the end plate (52) in addition to a first lock-in position corresponding to the securing position (Figure 2) of the securing crosspiece (108).

22. Linear guide device according to Claim 21,
characterised in that the fastening arm (112) can be transferred from the second lock-in position (Figure 6) to the first lock-in position (Figure 2) by the effect of pressure and locks automatically in the first lock-in position (Figure 2).

23. Linear guide device according to any one of Claims 16 - 22,
characterised in that the load-bearing rolling body track (18-18') of the guide rail (10) is formed by two partial tracks (18, 18') which are separated from one another by a holding groove (110) for the securing crosspiece (108).

24. Linear guide device according to any one of Claims 16 - 23,
characterised in that the securing crosspiece (108) extends in the transition region from the load-bearing row of rolling bodies (36) to a curved row of rolling bodies (40) over an outer face of a deflection tongue (104) for the rolling bodies (34), which outer face is turned away from a deflection face (106) of the deflection tongue (104).

25. Linear guide device according to any one of Claims 16 - 22,
characterised in that two securing crosspieces (162'b, 162"b) lie against the load-bearing row of rolling bodies (36) on both side of their line of contact with the load-bearing rolling body track (18b) of the guide rail (10).

26. Linear guide device according to any one of Claims 1 - 25,
characterised in that a longitudinal seal (15) is located on a side part (50) of the guide carriage housing (48) in a sealing position with respect to the guide rail (10).

27. Linear guide device according to any one of Claims 1 - 26,
characterised in that at least one sealing arrangement (134) is located on a side of at least one end plate (52) which is remote from the carriage body (62) in a sealing position with respect to a profile of the guide rail (10).

28. Linear guide device according to Claim 27,
characterised in that the sealing arrangement (34) is formed as a sealing plate with a sealing lip (136) lying against the profile of the guide rail (10),

29. Linear guide device according to any one of Claims 1 - 28,
characterised in that at least one of the deflection bodies (64) can be secured directly to its associated end plate (52) by snap connection means (86, 88) and in turn secures the carriage body (62) within the guide carriage housing (48) by way of projections (70) engaging over the carriage body (62).

30. Linear guide device according to any one of Claims 27 - 29,
characterised in that the sealing arrangement (134) is secured to the guide carriage housing (48) by snap connection means (138, 140).

31. Linear guide device according to any one of Claims 1 - 30,
characterised in that the carriage body (62) is formed for mounting a structural unit which is guided by it along the guide rail (10).

32. Linear guide device according to Claim 31,
characterised in that at least one contact face (24), which projects beyond the guide carriage housing (48), is formed on the carriage body (62) for the structural unit.

33. Linear guide device according to any one of Claims 1 - 32,
characterised in that the guide carriage is provided with at least one lubricant supply hole (144, 144b, 144c; 170, 170a, 170b, 170c) which is accessible from outside.

34. Linear guide device according to Claim 33,
characterised in that the lubricant supply hole or at least one of the lubricant supply holes (144, 144b, 144c; 170, 170a, 170b, 170c) is or are provided with non-return valves.

35. Linear guide device according to any one of Claims 1 - 34,
characterised in that at least one lubricant supply hole (144c) in the guide carriage (20c) is disposed in the region of at least one end plate (52c).

36. Linear guide device according to Claim 35,
characterised in that the lubricant supply hole (144, 144b, 144c) communicates with the rolling body circuit (32) via at least one lubricant through-channel (146, 148; 146b, 148b; 146c, 148c) extending in the axial direction over an end plate (52, 52b, 52c) and a deflection body (64, 64b, 64c).

37. Linear guide device according to Claim 36,
characterised in that the lubricant through-channel (148, 148b, 148c) opens into the rolling body circuit (32) in the region of the curved row of rolling bodies (40).

38. Linear guide device according to Claim 36 or 37,
characterised in that the lubricant through-channel (146, 146b, 146c) passes through the end plate (52, 52b, 52c).

39. Linear guide device according to any one of Claims 36 - 38,
characterised in that the lubricant through-channel (148, 148b, 148c) passes through the deflection body (64, 64b, 64c).

40. Linear guide device according to any one of Claims 36 - 38,
characterised in that the lubricant through-channel (148c) is formed in the bridging region of the deflection body (64c) as an open lubricant groove (180c) in an end face (182c) of the deflection body (64c) which is parallel to the axis (12c), wherein this lubricant groove (180c) is covered by the adjoining side part (50c) of the guide carriage housing (48c).

41. Linear guide device according to any one of Claims 36 - 40,
characterised in that the lubricant through-channel (148, 148b, 148c) has an end section which is near the opening into the respective rolling body circuit (32) and which is formed by a trough (184, 184b, 184c) open towards the carriage body (62, 62b, 62c), wherein this open trough (184, 184b, 184c) is covered by lying against an associated end face (68, 68b, 68c), which is normal to the axis, of the carriage body (62, 62b, 62c).

42. Linear guide device according to any one of Claims 36 - 41,
characterised in that the lubricant through-channel (146) has an end section which is near the lubricant supply hole (144) and passes through a sealing plate (134) adjoining the end plate (52).

43. Linear guide device according to any one of Claims 36 - 41,
characterised in that the lubricant supply hole (144c) is located in the end plate (52c) and - if a sealing plate (134c) is located on this end plate (52c) - in a region (178c) not covered by the sealing plate (134c).

44. Linear guide device according to Claim 43,
characterised in that the sealing plate (134c) has a recess (176c), and that a projection (178c), which projects away from the carriage body (62c) in the axial direction, is disposed at the end plate (52c), the end face of which projection which is remote from the carriage body (62c) comprising the lubricant supply hole (144c).

45. Linear guide device according to Claim 44,
characterised in that the projection (178c) is held at least partially by an edge recess (176c) in the sealing plate (134C).

46. Linear guide device according to Claim 45,
characterised in that the projection (178c) is substantially complementary to the edge recess (176c) in the sealing plate (134c).

47. Linear guide device according to any one of Claims 33 - 46,
characterised in that at least one lubricant supply hole (170, 170a, 170b, 170c) is disposed in the region of the side part (50, 50a, 50b, 50c) and/or a side face of the guide carriage (20, 20a, 20c) running parallel to the side part (50, 50a, 50b, 50c).

48. Linear guide device according to Claim 47,
characterised in that the lubricant supply hole (170, 170a, 170b, 170c) is disposed in the abutment region between an edge of the side part (50, 50a, 50b, 50c) and an adjoining region of the carriage body (62, 62a, 62b, 62c).

49. Linear guide device according to either of Claims 47 and 48,
characterised in that the lubricant supply hole (170, 170a, 170b, 170c) leads - preferably in a straight line - to the returning row of rolling bodies (38) in a plane which is substantially orthogonal to the axis (12, 12c).

50. Linear guide device according to any one of Claims 18 - 49,
characterised in that, at the end of at least one'orthogonal fastening arm (112c), the securing crosspiece (108c) has a securing arm (114c) which is substantially parallel to the axis (12c) and enters a securing arm holding recess (186c) in the respective end plate (52c) and, if desired, also of the respective deflection body (64c) in a securing manner.

51. Linear guide device according to any one of Claims 18 - 50,
characterised in that the fastening arm (108c) is held in a relief-like holding slot (124c) in the associated end plate (52c) and/or an adjoining sealing plate (134c).

## Revendications

1. Dispositif de guidage linéaire comprenant un rail de guidage (10) avec un axe (12) et au moins un chariot de guidage (20), déplaçable sur ce rail de guidage (10) dans la direction de l'axe (12) et qui est guidé sur le rail de guidage (10), par l'intermédiaire d'au moins une circulation sans fin (32) de corps de roulement,
cette circulation de corps de roulement (32) étant constituée d'une rangée de corps de roulement (36) en engagement simultané avec une voie de roulement (18-18') porteuse des corps de roulement du rail de guidage (10) et une voie de roulement (42) porteuse des corps de roulement du chariot de guidage (20), d'une rangée de corps de roulement (38) de retour dans un guidage de retour (44) des corps de roulement du chariot de guidage (20) et de rangées en arc (40) de corps de roulement, qui relient entre elles la rangée de corps de roulement (36) et la rangée de corps de roulement de retour (38), à leurs extrémités et qui sont guidées dans des guidages en arc (46) des corps de roulement du chariot de guidage (20),
dans lequel le chariot de guidage (20) est réalisé avec un boîtier (48) et avec un corps (62) logé à l'intérieur du boîtier (48) et fabriqué séparément du boîtier (48) du chariot de guidage,
dans lequel en outre le boîtier (48) du chariot de guidage comprend des parties latérales (50) sensiblement parallèles à la direction axiale et adjacentes à la circulation de corps de roulement (32), et comprend en outre des plaques terminales (52) sensiblement orthogonales à la direction axiale et adjacentes chacune à l'une des rangées en arc (40) des corps de roulement,
dans lequel en outre la rangée de corps de roulement (36) porteuse est guidée sur le corps (62) du chariot,
et dans lequel un corps de limitation de guidage en arc (64), fabriqué séparément du corps (62) et du boîtier (48) du chariot de guidage, est inséré dans la direction axiale entre le corps (62) du chariot et la plaque terminale (52) correspondante,
caractérisé
en ce que le boîtier (48) du chariot de guidage forme un puits de positionnement (54) qui, au moment de l'introduction du corps (62) du chariot et des corps de limitation du guidage en arc (64) - réalisés sous la forme de corps de renvoi (64) avec des surfaces de guidage en arc (98) du guidage en arc correspondant des corps de roulement - positionne correctement du point de vue fonctionnel les uns par rapport aux autres le corps (62) du chariot, les corps de renvoi (64) et le boîtier (48) du chariot de guidage,
et en ce que sont prévus des moyens de liaison à déclic (86, 88) qui bloquent le corps (62) du chariot et les corps de renvoi (64) dans ce positionnement sur le boîtier (48) du chariot de guidage.

2. Dispositif de guidage linéaire selon la revendication 1,
caractérisé
en ce qu'au moins une circulation de corps de roulement (32) est prévue sur chacune de deux faces latérales (16) espacées l'une de l'autre du rail de guidage (10) et en ce que le boîtier (48) du chariot de guidage présente un élément latéral de part et d'autre du rail de guidage (10).

3. Dispositif de guidage linéaire selon la revendication 1 ou 2,
caractérisé
en ce que le corps (62) du chariot et les corps de renvoi (64) peuvent être introduits dans le boîtier (48) du chariot de guidage, dans une direction (54) perpendiculaire à la direction axiale du rail (10) et peuvent y être fixés.

4. Dispositif de guidage linéaire selon l'une des revendications 1 à 3,
caractérisé
en ce qu'une surface de guidage (96) radialement intérieure du guidage en arc (46) des corps de roulement est appliquée sur le boîtier (48) du chariot de guidage et d'autres surfaces de guidage (98), de préférence toutes les autres, du guidage en arc (46) des corps de roulement sont appliquées sur le corps de renvoi (64) correspondant.

5. Dispositif de guidage linéaire selon l'une des revendications 1 à 4,
caractérisé
en ce que les éléments latéraux (50) sont réalisés d'une seule pièce avec les plaques terminales (52).

6. Dispositif de guidage linéaire selon la revendication 5,
caractérisé
en ce que les éléments latéraux (50) sont réalisés d'une seule pièce avec les plaques terminales (52) dans une matière pouvant être coulée ou injectée, notamment en matière plastique.

7. Dispositif de guidage linéaire selon l'une des revendications 1 à 6,
caractérisé
en ce que les corps de renvoi (64) sont réalisés, de préférence d'une seule pièce, en une matière pouvant être coulée ou injectée, notamment en matière plastique.

8. Dispositif de guidage linéaire selon l'une des revendications 1 à 7,
caractérisé
en ce que le corps (62) du chariot est réalisé sous la forme d'un corps profilé qui - vu dans des plans de coupe orthogonaux à la direction axiale - présente un profil constant sensiblement sur toute son étendue longitudinale, parallèle à la direction axiale.

9. Dispositif de guidage linéaire selon l'une des revendications 1 à 8,
caractérisé
en ce que le guidage de retour (44) des corps de roulement est constitué par des surfaces de guidage de retour (90, 92) coopérantes du corps (62) et du boîtier (48) du chariot de guidage.

10. Dispositif de guidage linéaire selon l'une des revendications 1 à 9,
caractérisé
en ce que sur le boîtier (48) du chariot de guidage, sur le corps (62) du chariot ou/et sur au moins l'un des corps de renvoi (64) sont formées des surfaces de positionnement (56, 58, 60, 66, 68, 74, 76, 78) qui, lorsque le corps (62) du chariot ou les corps de renvoi (64) sont montés dans le boîtier (48) du chariot de guidage, assurent un positionnement fonctionnellement correct de ces éléments les uns par rapport aux autres.

11. Dispositif de guidage linéaire selon l'une des revendications 1 à 10,
caractérisé
en ce que dans le cas où le chariot de guidage (20) est réalisé avec au moins une paire de circulations de corps de roulement (32), qui se situent de part et d'autre du rail de guidage (10), et dans le cas où le boîtier (48) du chariot de guidage est réalisé sous la forme d'un cadre rectangulaire avec deux éléments latéraux (50) et deux plaques terminales (52), les éléments latéraux (50) et les plaques terminales (52) forment le puits de positionnement (54) et autorise l'introduction du corps (62) du chariot ou/et des corps de renvoi (64) dans une direction d'introduction, laquelle direction d'introduction est approximativement perpendiculaire à l'axe (12) du rail et orthogonale à un plan en boucle des circulations de corps de roulement (32).

12. Dispositif de guidage linéaire selon l'une des revendications 1 à 11,
caractérisé
en ce que le puits de positionnement (54) pour l'introduction du corps (62) du chariot et des corps de renvoi (64), possède des surfaces d'introduction (56, 58), servant à approcher l'axe (12), et une surface de fond (60) qui limite l'introduction et en ce que sur la surface de fond (60) est appliquée au moins une pièce de renvoi (94) d'un guidage en arc (46) des corps de roulement, de préférence d'un seul tenant, laquelle pièce de renvoi forme une surface de guidage en arc (96) radialement intérieure, sensiblement orthogonale à un plan en boucle d'une circulation de corps de roulement (32) correspondante, pour cette circulation de corps de roulement (32).

13. Dispositif de guidage linéaire selon la revendication 12,
caractérisé
en ce que dans une surface de contact (66), tournée vers le corps (62) du chariot d'au moins un corps de renvoi (64), est disposée encastrée une rigole de guidage (98) en forme d'arc partiel pour les corps de roulement (34) d'une rangée de corps de roulement en arc (40), laquelle surface de contact est sensiblement concentrique à la surface de guidage en arc (96).

14. Dispositif de guidage linéaire selon l'une des revendications 12 et 13,
caractérisé
en ce que sur au moins un corps de renvoi (64), faisant partie du guidage en arc (46) des corps de roulement, est formée une languette de renvoi (104) qui parvient sensiblement tangentiellement sur une voie de roulement (18-18') porteuse correspondante des corps de roulement du rail de guidage (10).

15. Dispositif de guidage linéaire selon l'une des revendications 1 à 14,
caractérisé
en ce que les corps de roulement (34) de la rangée de corps de roulement (36) porteuse sont bloqués imperdables sur le chariot de guidage (20), même lorsque le chariot de guidage (20) est retiré du rail de guidage (10).

16. Dispositif de guidage linéaire selon la revendication 15,
caractérisé
en ce que les corps de roulement (34) de la rangée de corps de roulement (36) porteuse sont bloqués imperdables dans le chariot de guidage (20) par au moins une entretoise de blocage (108) qui s'étend sensiblement parallèlement à l'axe (12) du rail de guidage (10).

17. Dispositif de guidage linéaire selon la revendication 16,
caractérisé
en ce que l'entretoise de blocage (108) est réalisée séparément des corps de renvoi (64) et du boîtier (48) du chariot de guidage.

18. Dispositif de guidage linéaire selon la revendication 16 ou 17,
caractérisé
en ce que l'entretoise de blocage (108) est munis, à au moins l'une de ses extrémités, d'une branche de fixation (112), sensiblement perpendiculaire à l'axe (12), et qui peut être bloquée sur un élément du chariot de guidage (20), sensiblement perpendiculaire à l'axe (12), de préférence sur une plaquette terminale (52).

19. Dispositif de guidage linéaire selon la revendication 18,
caractérisé
en ce que l'entretoise de blocage (108) présente deux branches de fixation (112) sensiblement en U.

20. Dispositif de guidage linéaire selon l'une des revendications 16 à 19,
caractérisé
en ce que l'entretoise de blocage (108) est déplaçable entre une position de blocage (fig. 2) et une position d'introduction de billes (fig. 6), de préférence sensiblement perpendiculairement à l'axe (12).

21. Dispositif de guidage linéaire selon l'une des revendications 18 à 20,
caractérisé
en ce que pour la branche de fixation (112) il est prévu sur la plaque terminale (52), à côté d'une première position d'encliquetage correspondant à la position de blocage (fig. 2) de l'entretoise de blocage (108), une deuxième position d'encliquetage correspondant à la position d'introduction de billes (fig. 6) de l'entretoise de blocage (108).

22. Dispositif de guidage linéaire selon la revendication 21,
caractérisé
en ce que la branche de fixation (112) peut passer sous l'action d'une pression de la deuxième position d'encliquetage (fig. 6) à la première position d'encliquetage (fig. 2), et peut s'accrocher automatiquement dans la première position d'encliquetage (fig. 2).

23. Dispositif de guidage linéaire selon l'une des revendications 16 à 22,
caractérisé
en ce que la voie de roulement (18-18') porteuse des corps de roulement du rail de guidage (10) est formée par deux voies de roulement partielles (18, 18') qui sont séparées l'une de l'autre par un rainure formant logement (110) pour l'entretoise de blocage (108).

24. Dispositif de guidage linéaire selon l'une des revendications 16 à 23,
caractérisé
en ce que dans la zone de transition entre la rangée de corps de roulement (36) porteuse et une rangée de corps de roulement en arc (40), l'entretoise de blocage (108) passe sur une face extérieure d'une languette de renvoi (104) pour les corps de roulement (34), laquelle face extérieure est tournée à l'opposé d'une face de renvoi (106) de la languette de renvoi (104).

25. Dispositif de guidage linéaire selon l'une des revendications 16 à 22,
caractérisé
en ce que deux cloisons de blocage (162'b, 162"b) s'appliquent contre la rangée de corps de roulement (36) supportant la charge, de part et d'autre de sa ligne de contact avec la voie de roulement (18b) supportant la charge du rail de guidage (10).

26. Dispositif de guidage linéaire selon l'une des revendications 1 à 25,
caractérisé
en ce qu'une garniture d'étanchéité longitudinale (50) est appliquée dans une position étanche par rapport au rail de guidage (10) sur un élément latéral (50) du boîtier (48) du chariot de guidage.

27. Dispositif de guidage linéaire selon l'une des revendications 1 à 26,
caractérisé
en ce qu'au moins un dispositif d'étanchéité (134) est appliqué, en position d'étanchéité par rapport à un profilé du rail de guidage (10) sur un côté, tourné à l'opposé du corps (62) du chariot, d'au moins une plaque terminale (52).

28. Dispositif de guidage linéaire selon la revendication 27,
caractérisé
en ce que le dispositif d'étanchéité (134) est réalisé sous la forme d'une plaque d'étanchéité avec une lèvre d'étanchéité (136) qui s'applique contre le profilé du rail de guidage (10).

29. Dispositif de guidage linéaire selon l'une des revendications 1 à 28,
caractérisé
en ce qu'au moins l'un des corps de renvoi (64) peut être bloqué directement contre sa plaque terminale (52) correspondante, par des moyens de liaison à déclic (86, 88), et assure de son côté le blocage du corps (62) du chariot à l'intérieur du boîtier (48) du chariot de guidage au moyen de saillies (70) qui passent sur le corps (62) du chariot.

30. Dispositif de guidage linéaire selon l'une des revendications 27 à 29,
caractérisé
en ce que le dispositif d'étanchéité (134) est bloqué sur le boîtier (48) du chariot de guidage par des moyens de liaison à déclic (138, 140).

31. Dispositif de guidage linéaire selon l'une des revendications 1 à 33,
caractérisé
en ce que le corps (62) du chariot est réalisé en vue de l'application d'une unité de construction guidée par ce corps le long du chariot de guidage (10).

32. Dispositif de guidage linéaire selon la revendication 31,
caractérisé
en ce que sur le corps (62) du chariot est prévue au moins une surface de contact (24), faisant saillie du boîtier (48) du chariot de guidage pour l'unité de construction.

33. Dispositif de guidage linéaire selon l'une des revendications 1 à 32,
caractérisé
en ce que le chariot de guidage présente au moins un perçage d'arrivée de lubrifiant (144, 144b, 144c ; 170, 170a, 170b, 170c) accessible de l'extérieur.

34. Dispositif de guidage linéaire selon la revendication 33,
caractérisé
en ce que le ou les perçages d'arrivée de lubrifiant (144, 144b, 144c ; 170, 170a, 170b, 170c) est ou sont pourvus de clapets de non-retour.

35. Dispositif de guidage linéaire selon l'une des revendications 1 à 34,
caractérisé
en ce qu'au moins un perçage d'arrivée de lubrifiant (144c) est disposé sur le chariot de guidage (20c) dans la région d'au moins une plaque terminale (52c).

36. Dispositif de guidage linéaire selon la revendication 35,
caractérisé
en ce que le perçage d'arrivée de lubrifiant (144, 144b, 144c) communique avec la circulation de corps de roulement (32) à travers au moins un canal de passage de lubrifiant (146, 148 ; 146b, 148 ; 146c, 148c) qui s'étend dans la direction axiale au-delà d'une plaque terminale (52, 52b, 52c) et d'un corps de renvoi (64, 64b, 64c).

37. Dispositif de guidage linéaire selon la revendication 36,
caractérisé
en ce que le canal de passage de lubrifiant (148, 148b, 148c) débouche dans la circulation de corps de roulement (32) dans la région de la rangée en arc (40) des corps de roulement.

38. Dispositif de guidage linéaire selon la revendication 36 ou 37,
caractérisé
en ce que le canal de passage de lubrifiant (146, 146b, 146c) traverse la plaque terminale (52, 52b, 52c).

39. Dispositif de guidage linéaire selon l'une des revendications 36 à 38,
caractérisé
en ce que le canal de passage de lubrifiant (148, 148b, 148c) traverse le corps de renvoi (64, 64b, 64c).

40. Dispositif de guidage linéaire selon l'une des revendications 36 à 38,
caractérisé
en ce que dans la zone de transition du corps de renvoi (64c), le canal de passage de lubrifiant (148c) est formé en tant que rainure de lubrifiant (180c) ouverte dans une face terminale (182c) du corps de renvoi (64c) parallèle à l'axe (12c), cette rainure de lubrifiant (180c) étant recouverte par l'élément latéral (50c) qui s'applique contre elle du boîtier (48c) du chariot de guidage.

41. Dispositif de guidage linéaire selon l'une des revendications 36 à 40,
caractérisé
en ce que le canal de passage de lubrifiant (148, 148b, 148c) présente un segment terminal proche de l'embouchure dans la circulation de corps de roulement (32) correspondante, lequel segment terminal est formé par une goulotte (184, 184b, 184c) pratiquée dans la plaque terminale et découverte vers le corps (62, 62b, 62c) du chariot, cette goulotte découverte (184, 184b, 184c) étant recouverte par son application contre une face terminale (68, 68b, 68c) correspondante, perpendiculaire à l'axe, du corps (62, 62b, 62c) du chariot.

42. Dispositif de guidage linéaire selon l'une des revendications 36 à 41,
caractérisé
en ce que le canal de passage de lubrifiant (146) présente un segment terminal proche du perçage d'arrivée de lubrifiant (144), lequel traverse une plaque d'étanchéité (134) qui s'applique contre la plaque terminale (52).

43. Dispositif de guidage linéaire selon l'une des revendications 36 à 41,
caractérisé
en ce que le perçage d'arrivée de lubrifiant (144c) est pratiqué sur la plaque terminale (52c) et ce - si une plaque d'étanchéité (134c) est appliquée sur cette plaque terminale (52c) - dans une zone (178c) non recouverte par la plaque d'étanchéité (164c).

44. Dispositif de guidage linéaire selon la revendication 43,
caractérisé
en ce que la plaque d'étanchéité (64c) présente une découpe (176c) et en ce que sur la plaque terminale (52c) est prévue une saillie (178c) dépassant du corps (162c) du chariot dans la direction axiale, saillie dont la face terminale, éloignée du corps (62c) du chariot, présente le perçage d'arrivée de lubrifiant (144c).

45. Dispositif de guidage linéaire selon la revendication 44,
caractérisé
en ce que la saillie (178c) est logée au moins partiellement par une découpe de bordure (176c) de la plaque d'étanchéité (134c).

46. Dispositif de guidage linéaire selon la revendication 45,
caractérisé
en ce que la saillie (178c) est sensiblement complémentaire de la découpe de bordure (176c) de la plaque d'étanchéité (134c).

47. Dispositif de guidage linéaire selon l'une des revendications 33 à 46,
caractérisé
en ce qu'au moins un perçage d'arrivée de lubrifiant (170, 170a, 170b, 170c) est disposé dans la zone de l'élément latéral (50, 50a, 50b, 50c) et/ou d'une face latérale, parallèle à l'élément latéral (50, 50a, 50b, 50c), du chariot de guidage (20, 20a, 20c).

48. Dispositif de guidage linéaire selon la revendication 47,
caractérisé
en ce que le perçage d'arrivée de lubrifiant (170, 170a, 170b, 170c) est disposé dans la région du joint entre un bord de l'élément latéral (50, 50a, 50b, 50c) et une zone adjacente du corps (62, 62a, 62b, 62c) du chariot.

49. Dispositif de guidage linéaire selon l'une des revendications 47 et 48,
caractérisé
en ce que le perçage d'arrivée de lubrifiant (170, 170a, 170b, 170c) mène, dans un plan sensiblement orthogonal à l'axe (12, 12c) - de préférence en ligne droite - à la rangée de corps de roulement (38) de retour.

50. Dispositif de guidage linéaire selon l'une des revendications 18 à 49,
caractérisé
en ce que l'entretoise de blocage (108c) présente, à l'extrémité d'au moins une branche de fixation (112c) perpendiculaire, une branche de blocage (114c) qui est sensiblement parallèlement à l'axe (12c) et qui pénètre en assurant le blocage dans un évidement formant logement (186c) de la branche de blocage, de la plaque terminale (52c) correspondante et, si on le souhaite, également du corps de renvoi (64c) correspondant.

51. Dispositif de guidage linéaire selon l'une des revendications 18 à 50,
caractérisé
en ce que la branche de fixation (108c) est logée dans une fente formant logement (124c) du type relief de la plaque terminale (52c) correspondante et/ou d'une plaque d'étanchéité (134c) s'appliquant contre la branche.
